# EUROPÄISCHE PATENTSCHRIFT

(11) **EP 2 167 618 B1**
(45) Veröffentlichungstag und Bekanntmachung des Hinweises auf die Patenterteilung: **28.11.2018**
(21) Anmeldenummer: 08757304.4
(22) Anmeldetag: 11.07.2008
(51) Int. Cl.: C10L 5/44, C10L 5/36, B30B 11/22, B30B 11/24

(54) **VERFAHREN UND VORRICHTUNG ZUR HERSTELLUNG VON BRENNSTOFFFORMELEMENTEN AUS BIOMASSENMATERIAL, SOWIE DAS ENTSPRECHENDE BRENNSTOFFFORMELEMENT**
METHOD AND APPARATUS FOR PRODUCING SHAPED FUEL ELEMENTS FROM BIOMASS MATERIAL, AND THE CORRESPONDING SHAPED FUEL ELEMENT
PROCÉDÉ ET DISPOSITIF DE FABRICATION D'ÉLÉMENTS COMBUSTIBLES PRÉFORMÉS À PARTIR DE BIOMASSE, ET ÉLÉMENT COMBUSTIBLE PRÉFORMÉ CORRESPONDANT

(30) Priorität: 12.07.2007 EP 07112370
(43) Veröffentlichungstag der Anmeldung: 31.03.2010
(73) Patentinhaber: Bioburn AG, 6144 Zell (CH)
(72) Erfinder: BÄRTSCHI, Erwin, CH-4914 Roggwil (CH)
(74) Vertreter: Bremi, Tobias Hans
(86) Internationale Anmeldenummer: PCT/CH2008/000312
(87) Internationale Veröffentlichungsnummer: WO 2009/006752

(56) Entgegenhaltungen:
- WO-A-00/18572
- AT-B- 401 525
- DD-A1- 272 258
- DE-A1- 3 235 038
- DE-A1- 3 510 969
- DE-A1- 3 546 489
- US-A- 4 415 336
- US-A1- 2004 247 719

## Beschreibung

### TECHNISCHES GEBIET

Die Erfindung betrifft ein Verfahren, eine Vorrichtung und ein System zur Herstellung von Brennstoffformelementen aus Biomassenmaterial, sowie das entsprechende Brennstoffformelement. Insbesondere betrifft die Erfindung ein solches Verfahren, eine Vorrichtung und ein System zur Herstellung von Brennstoffformelementen aus Biomassenmaterial, bei welchen die Brennstoffformelemente mit einem möglichst niedrigen Energieverbrauch hergestellt werden.

### STAND DER TECHNIK

Abfälle aus Biomasse fallen heute an vielen Orten in relativ grossen Mengen an. So entstehen beispielsweise bei den Holzbearbeitungsarbeiten in den Schreinereien oder ähnlichen Holzverarbeitungsstätten Holzabfälle, welche entsorgt werden müssen. Die Getreideproduktion in den Bauernbetrieben lässt ebenfalls viele Getreideabfälle zurück. Auch in den privaten Haushalten gibt es insbesondere bei Gartenarbeiten viele Biomassen-Abfälle, wie zum Beispiel der Rasenschnitt oder die Sträucherhäcksel, welche ebenfalls relativ aufwändig und teuer entsorgt werden müssen.

Es sind inzwischen verschiedene Möglichkeiten für eine Verwertung von diesen Biomassen-Abfällen bekannt. So können insbesondere die Holzabfälle (Holzspäne und/oder Sägemehl) beispielsweise in Verbrennungsanlagen verbrannt werden, wobei elektrischer Strom produziert wird. Auch die anderen Abfälle aus Biomasse können mit grösserem oder kleinerem Erfolg durch Verbrennung verwertet werden. Allerdings handelt es sich bei den Biomassen-Abfällen oft um frische, also feuchte Materialien, welche einen niedrigen Brennwert und gleichzeitig einen grossen Anteil an bei der Verbrennung freigesetzten Schadstoffen aufweisen. Aus den Biomassen-Abfällen kann ausserdem durch besondere Verfahren auch das so genannte Biogas hergestellt werden.

Dazu werden die Biomassen-Abfälle in den so genannten Vergasungsanlagen einer Reihe von biologischen Prozessen unterzogen, so dass schliesslich Gas entsteht, welches als Ersatz für das Erdgas eingesetzt werden kann. Schliesslich kann die Biomasse im Allgemeinen, und daher auch das Biomassen-Abfallmaterial zu Kompost verarbeitet und wieder verwendet werden. Jedoch weisen alle diese Verwertungsmethoden den wesentlichen Nachteil auf, dass die Verarbeitung der Abfälle üblicherweise nicht am Ort des Entstehens vorgenommen werden kann. Daher müssen diese Biomassen-Abfälle zunächst aufwändig zum Verarbeitungsort transportiert werden, was einerseits mit erheblichen Kosten verbunden, und andererseits nicht zwingenderweise sehr umweltfreundlich ist. Schliesslich müssen sehr oft zur Abnahme von Biomassen-Abfällen diverse Gebühren bezahlt werden, was deren Entsorgung zusätzlich verteuert.

Ausserdem sind seit einiger Zeit Verfahren bekannt, durch welche aus Sägemehl durch Pressen besondere Brennstoffformelemente hergestellt werden. Diese Brennstoffformelemente (üblicherweise Holz-Pellets oder aber «flüssiges Holz» genannt) können dann in besonders gebauten Öfen verbrannt und als eine naturfreundliche Alternative zur Erdöl oder -gasheizung zum Beheizen von Häusern verwendet werden. Allerdings müssen diese Holz-Pellets während der Herstellung mit einem besonderen Mittel (meistens auf Stärkebasis) überzogen werden, um die durch das Pressen gegebene Form behalten. Allerdings weisen diese Brennstoffformelemente den entscheidenden Nachteil auf, dass sie lediglich aus Sägemehl auf eine zufriedenstellende Art und Weise fabriziert werden können, und dass dementsprechend keine weiteren Biomassen-Abfälle verwertet werden können. Somit lösen diese Holz-Pellets lediglich einen Teil der jetzt bestehenden Entsorgungsprobleme von Biomassen-Abfällen. Ausserdem können diese Holz-Pellets zum Beispiel beim Transport oder bei der Verwendung in den Öfen sehr einfach beschädigt werden, wobei oft sehr grosse Mengen an schädlichem Feinstaub in die Luft abgegeben wird. Schliesslich fallen bei der Produktion von diesen herkömmlichen Holz-Brennstoffformelementen in vielen Fällen die Transportkosten sogar zweimal an, da ja die Biomassen-Abfälle zunächst zur Pelletieranlage gebracht und dort verarbeitet, und die fabrizierten Pellets anschliessend wieder zurück gebracht werden müssen.

Die DE-A-35 10 969 beschreibt eine Formpressvorrichtung für faseriges Material, z.B. Halmgut, Stoh o.ä., die das zu formende Material in einen Presskopf mit einem Presskanal fördert, in dem ein Pressstrang gebildet wird, wobei der Presskanal durch eine radial oder spiralig verlaufende Profilierung eingegrenzt wird, und austrittsseitig durch eine in Förderrichtung geneigt verlaufende glatte Ringfläche begrenzt ist. Die Begrenzungswand des Presskanals kann austrittsseitig konkav ausgebildet sein. Durch die Vorrichtung können angeblich haltbarere Presslinge mit geringerem Energieaufwand, als bisher möglich, erzielt werden.

Die US2004247719 beschreibt eine künstliche Feuerholzscheit und Zündstein-Chip-Herstellungsvorrichtung mit einer Schneidvorrichtung, einer Druckförderschneckeneinheit und einer Düse. Das Gerät wandelt standard-gewachste Wellpappekartons in künstliche Feuerholzscheite durch erste Slicing Kartonagen in Kartonstreifen, dann Zerhacken der Streifen in Kartonsegmente in der Schneidanordnung.

Die DD 272258 beschreibt eine Vorrichtung zum Verdichten von langenfaserigen Futterstoffen, bestehend aus einer kombinierten Zuführ- und Arbeitsschnecke, die in einem mit Zügen versehenen Druckrohr läuft, hinter dem ein mit Durchbrüchen versehener Vorschneider, ein umlaufendes Messer und Ausformelemente angeordnet sind.

Die DE-A-3546489 beschreibt, wie Munitionsformteile für Rohrwaffen in Gestalt verbrennbarer Hülsen auf Nitrozellulosebasis aus einer wässrigen Aufschlämmung kontinuierlich in einem Schneckenextruder hergestellt werden, dem die Aufschlämmung sowie Stabilisatoren, brennbares Fasermaterial, Bindemittel und gegebenenfalls Weichmacher zugeführt werden. Die faserartigen Bestandteile werden in Knet- und Presszonen unter gleichzeitigem Abpressen des Wassers verfilzt und zu einem endlosen rohrartigen Gebilde ausgeformt, das dann zu einzelnen Hülsen abgelängt, gegebenenfalls auch noch auf Wunschmaß und -form gepresst wird.

### OFFENBARUNG DER ERFINDUNG

Es ist daher eine Aufgabe der vorliegenden Erfindung, ein neues Brennstoffformelement, sowie das Verfahren, die Vorrichtung und das System zur Herstellung von Brennstoffformelementen aus Biomassenmaterial vorzuschlagen, welche nicht die Nachteile des Standes der Technik aufweisen. Es ist insbesondere eine Aufgabe der vorliegenden Erfindung, ein Brennstoffformelement aus Biomassenmaterial, das Verfahren, die Vorrichtung und das System zur Herstellung von Brennstoffformelementen aus Biomassenmaterial bereitzustellen, welche eine kostengünstige, einfache und umweltfreundliche Entsorgung oder besser eigentlich eine Umnutzung von verschiedensten Biomassen-Abfällen ermöglichen, wobei zugleich auch wirtschaftlichere (vor allem dank einem viel niedrigeren Energieverbrauch) und umweltfreundlichere Mittel zur Beheizung von Häusern und anderen Gebäulichkeiten produziert werden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele der Erfindung dadurch erreicht, dass im Verfahren zur Herstellung von Brennstoffformelementen aus Biomassenmaterial, das Biomassenmaterial mittels eines Zuführmittels zu einer Füllvorrichtung zugeführt wird, das Biomassenmaterial aus der Füllvorrichtung entnommen und mittels eines Fördermittels derart verdichtet und aufgerollt wird, dass aus dem Biomassenmaterial ein wurstförmiges Profil gebildet wird, und das verdichtete und aufgerollte Biomassenmaterial mittels eines Schneidewerkzeugs zu Brennstoffformelementen geschnitten wird. Ein solches Verfahren hat insbesondere den Vorteil, dass grundsätzlich jedes beliebige Biomassenmaterial (oder sogar jede beliebige Kombination von zwei oder mehreren verschiedenen Biomassenmaterialien) zur Herstellung von Brennstoffformelementen verwendet und auf diese Art und Weise entsorgt, resp. besser umgenutzt werden kann. Ausserdem kann durch dieses Verfahren grundsätzlich jede Kombination von grobem und feinem Material verarbeitet werden, ohne dass eine Mahlanlage benötigt würde. Durch die Bearbeitung des Biomassenmaterials in feuchtem Zustand muss sehr wenig Energie aufgewendet werden, wodurch sich die Entsorgung von Biomassen-Abfällen und die Herstellung von brennbaren Brennstoffformelementen durch eine sehr hohe positive Energiebilanz auszeichnet. Nicht zuletzt zeichnen sich die durch dieses Verfahren hergestellten Brennstoffformelemente aus Biomasse durch eine äusserst gute Bruchfestigkeit aus. Da sie zudem nicht durch eine Überzugsschicht geschützt werden müssen, können bei der Verwendung solcher Pellets die Feinstaubemissionen deutlich vermindert, oder sogar gänzlich eliminiert werden.

Das Aufrollen kommt insbesondere dann zustande, wenn das Biomassenmaterial insbesondere faserig ist und z.B. Rasenschnitt, Sträucherhäcksel, Getreideabfälle, Pferdemist, Nadellaub, Herbstlaub, Stroh oder ähnliches oder eine Kombination daraus umfasst, weil diese Materialien besonders faserig sind und die im Verfahren ablaufende Aufrollung stabilisieren können.

Die Stabilität der Pellets kann gesteuert werden indem beispielsweise bei Feststellung von zu bröckelnden Pellets mehr Stärke und/oder Eiweiß hinzugefügt wird beispielsweise indem Getreidestaub und/oder Getreidemehl (Abfallprodukte) dem Ausgangsmaterial zugefügt wird.

Dieses Aufrollen, welches eine besondere Stabilität der erzeugten Pellets gewährleisten kann auch wenn keine Materialien mit entweder zusätzlichem Bindemittel oder Beschichtungsmittel oder mit natürlicherweise vorhandenen Bindemittel wie beispielsweise im Falle von Holzspänen Harz kommt zu Stande, weil das Verfahren dadurch gekennzeichnet ist, dass es sich beim Fördermittel um eine Förderschnecke handelt, deren Schneckengewinde an ihrem austrittseitigen Ende mit einer schrägen Fläche ausläuft, wobei vorzugsweise diese Fläche unter einem Winkel im Bereich von 30-60°, insbesondere bevorzugt im Bereich von 40-50°, ganz besonders bevorzugt circa 45° zur Achse der Förderschnecke geneigt ist.

Auch für schwieriges Ausgangsmaterial kann das Verfahren insbesondere dann verwendet werden, wenn die Förderschnecke auf der Eintrittseite einen ersten Abschnitt aufweist, in welchem die Schneckengewindelemente einen ersten grösseren Aussen-Durchmesser (das heisst der Aussenkontur der Gewindegänge) aufweisen als der zweite Aussen-Durchmesser in einem zweiten Abschnitt, welcher an der Austrittseite angeordnet ist. Dabei ist vorzugsweise der erste Aussen-Durchmesser im Bereich von 30-80 mm, bevorzugt im Bereich von 40-60 mm, und der zweite Aussen-Durchmesser vorzugsweise im Bereich von 10-40 mm, insbesondere bevorzugt im Bereich von 20-30 mm.

Das erfindungsgemässe Aufrollen und nicht nur pressen, binden und verdichten, wie dies im Stand der Technik geschieht, wird unter anderem auch dadurch erreicht, dass die Brennstoffformelemente von nur einem einzigen Fördermittel gefördert durch eine einzige Austrittsdüse heraustretend gebildet werden. Dabei fluchtet gewissermassen diese Austrittsdüse mit dem einzigen drehenden Fördermittel, bei welchem es sich bevorzugt um ein Schneckengewinde handelt.

Diese Austrittsdüse weist in Förderrichtung wenigstens einen ersten hohlen Abschnitt auf sowie einen zweiten hohlen Abschnitt, und der Durchmesser des ersten hohlen Abschnittes ist grösser als der Durchmesser des zweiten hohlen Abschnittes. Namentlich bevorzugt ist der Durchmesser des ersten hohlen Abschnitts im Bereich von 10-30% grösser als der Durchmesser des zweiten hohlen Abschnittes. Dabei ist das Förderschnecke ausgebildete Fördermittel bevorzugtermassen wenigstens abschnittsweise im ersten hohlen Abschnitt und koaxial zu diesem angeordnet, und die austrittseitige Spitze der Förderschnecke ist im wesentlichen beim oder unmittelbar vor dem als Stufe ausgebildeten Übergang vom ersten hohlen Abschnitt zum zweiten hohlen Abschnitt angeordnet ist.

Genau diese Bauweise zeigt besondere Vorteile und führt zu einer besonders erhöhten Stabilität der erzeugten Pellets. Bei Verwendung einer solchen Vorrichtung läuft nämlich mit den im zu vearbeitenden Material angeordneten Fasern folgendes ab: durch die Rotation der Förderschnecke in Kombination mit der schrägen Geometrie derselben an deren Spitze findet im ersten hohlen Abschnitt eine starke Rotation statt, welcher dazu führt, dass sich die Fasern in Umfangsrichtung orientieren und gewissermassen sich in radialer Richtung eine spiralförmige Schichtung ausbildet zu welcher die Fasern parallel angeordnet sind. Durch die an die Spitze der Förderschnecke anfolgende Stufe der Verjüngung in den zweiten hohlen Abschnitt, welcher typischerweise anschliessend mindestens 10 mm lang ist, und in welchem die Förderschnecke nicht mehr angeordnet ist, findet einerseits eine weitere Verdichtung des Materials statt, andererseits wird aber auch im peripheren Bereich die Rotation gebremst wären sie im zentralen Bereich noch weiter getragen wird. Damit erfahren die gewissermassen als Armierung wirkenden Fasern in diesem Herstellungsabschnitt eine Auslenkung in axialer Richtung, so dass sie am Ende beim Austritt aus der Düse sowohl in Umfangsrichtung als auch geneigt zur axialen Richtung angeordnet sind. Dies führt dazu, dass die als Armierung dienenden Fasern das Pellet nicht nur in Umfangsrichtung stabilisieren sondern auch in axialer Richtung und das somit gezielt eine stabilisierende Anordnung der Faserbestandteile im Pellet gewährleistet werden kann. Dass in diesem Sinne aufgerollte Biomassematerial verfügt also über eine äusserst hohe interne Stabilisierung welche verhindert, dass beispielsweise bei einem anfolgendem Transport die Pellets zerfallen und beispielsweise Staub gebildet wird.

Aufgrund der so erfolgenden Knetung der Biomasse entsteht Spannung zwischen den einzelnen Elementen. Dies erzeugt eine weitere Erhöhung der Stabilität. Die radiale Armierung wird am Ende des Extruders erzeugt und die axiale Armierung entsteht durch die Verjüngung des Durchmessers in der Düse, was eine Beschleunigung des Durchschubs und somit eine weitere Verdichtung mit Stabilitätseffekt zur Folge hat. Somit ist eine Armierung radial und axial gegeben. Zudem wird durch das Kneten der Masse die Feuchtigkeit gleichmässig verteilt und löst somit Stärke auf, was bei der Trocknung des Pellets eine stabile und harte Verbindung gewährleistet. Durch die Reibung der Biomasse wird die Temperatur an der Stelle der Stufe bis zu 120° erhöht. Dadurch wird das Eiweiss fest, was zu einer zusätzlichen Stabilisierung führt.

Tatsächlich sollte der Prozess so gefahren werden, dass an der Stelle der Stufe eine Temperatur im Bereich von 100-120°C vorliegt. Darunter binden typischerweise die Pellets zu wenig ab, darüber beginnen sie zu verkohlen. Einstellen lässt sich die Temperatur an dieser Stelle einerseits durch die Feuchtigkeit des Ausgangsmaterials (beispielsweise kann durch Zugabe von Sägemehl die Feuchtigkeit reduziert werden und damit die Temperatur erhöht werden, andererseits kann die Drehzahl der Förderschnecke erhöht werden oder trockenes Stroh hinzugefügt werden, so dass sich die Reibung und damit auch die Temperatur im Kanal erhöht; zudem ist es möglich, über die Länge der Austrittsdüse die Kompression zu erhöhen; eine Erniedrigung der Temperatur kann durch Zugabe von Feuchtigkeit zum Ausgangsmaterial erreicht werden oder durch eine Reduktion der Drehzahl der Förderschnecke) andererseits aber auch durch entsprechende Kühlung von Gehäusebestandteilen. Typischerweise bewegt sich die Drehzahl der Förderschnecke im Bereich von 250-380 U/min, bevorzugt wird eine Drehzahl im Bereich von 280 U/min.

Es ist übrigens auch möglich, dass Ausgangsmaterial zunächst einen halben Tag zu fermentieren und erst dann dem Prozess zuzuführen.

Weiterhin bevorzugtermassen ist wenigstens bereichsweise der erste Aussendurchmesser von Schneckengewindelementen in einem ersten Abschnitt (in welchem bevorzugtermassen die Förderschnecke nur einen Zug aufweist) nur unwesentlich geringer ist als der Innendurchmesser eines vorgeschalteten zusätzlichen hohlen Abschnittes, in welchem diese Schneckengewindelemente laufen, und/oder bevorzugtermassen wenigstens bereichsweise der zweite Aussendurchmesser von Schneckengewindelementen in einem zweiten Abschnitt (in welchem bevorzugtermassen die Förderschnecke zwei Züge aufweist) nur unwesentlich geringer ist als der Innendurchmesser des zweiten hohlen Abschnittes.

Bevorzugtermassen ist das Verfahren dadurch gekennzeichnet, dass im Verdichtungsbereich das Biomassenmaterial auf einer Temperatur im Bereich von 100-130°C, vorzugsweise im Bereich von 115-125°C gehalten wird.

Weiterhin ist bevorzugtermassen das Verfahren dadurch gekennzeichnet, dass der Feuchtigkeitsgehalt der in den Prozess eingeführten Biomasse im Bereich von 20-35 Gewichtsprozent, vorzugsweise im Bereich von 26-28 Gewichtsprozent beträgt.

In einer Ausführungsform werden die Brennstoffformelemente nach dem Schneiden getrocknet. Der Vorteil dieser Ausführungsform liegt insbesondere darin, dass die Brennstoffformelemente aus Biomassenmaterial auf diese Weise sehr einfach und sehr lange gelagert werden können, ohne dass dabei irgendwelche Qualitätseinbussen verzeichnet werden. Ausserdem erhalten die Brennstoffformelemente beim Trocknen zusätzliche Festigkeit, so dass sie noch weiter Bruchresistent werden. Darüber hinaus reduziert sich das Gewicht der Brennstoffformelemente aus Biomassenmaterial beim Trocknungsprozess um ein Vielfaches, wodurch auch der Transport von den erfindungsgemässen Brennstoffformelementen aus Biomassenmaterial im Vergleich zum Transport von herkömmlichen Pellets, oder aber Transport von nicht verarbeitetem Biomassenmaterial, wesentlich effizienter, kostengünstiger und umweltfreundlicher gestaltet werden kann.

In einer anderen Ausführungsform umfasst das Biomassenmaterial eine Kombination aus Rasenschnitt und/oder Sträucherhäcksel und/oder Holzspänen und/oder Sägemehl und/oder Getreideabfällen. Diese Ausführungsform hat unter anderem den Vorteil, dass praktisch alle heutzutage nicht oder nur ungenügend verwerteten Biomassen-Abfälle dank diesem Verfahren auf eine einfache und effiziente Art verwertet werden können.

Durch die beliebige Kombination verschiedener Materialien können den erfindungsgemässen Pellets auch die gewünschten Eigenschaften gegeben werden. So kann zum Beispiel durch die Zugabe einer gewissen Menge von Holzspänen in das Biomassen-material, welches anschliessend zu Pellets verarbeitet wird, der Aschenanteil beim Verbrennen im Ofen wesentlich reduziert werden. Andererseits kann die Beimischung einer kleineren oder grösseren Menge von Getreideabfällen die Bindung des Biomassenmaterials zum wurstförmigen Profil und die spätere Festigkeit von einzelnen Pellets begünstigen.

In einer weiteren Ausführungsform wird das Biomassenmaterial vor der Zuführung zur Füllvorrichtung mittels eines Zerkleinerungsmittels zerkleinert. Der Vorteil dieser Ausführungsform liegt vor allem darin, dass die Verarbeitung vom Biomassenmaterial vereinfacht werden kann. Dadurch kann auch insbesondere die Kraftanwendung für die Verdichtung des Biomassenmaterials und das anschliessende Aufwickeln zu den wurstförmigen Profilen, und damit auch der allgemeine Energieverbrauch, noch weiter reduziert werden. Zudem kann durch eine Zerkleinerung des Biomassenmaterials eine Homogenisierung des Biomassenmaterials bewirkt werden, wodurch bei der Durchführung des erfindungsgemässen Verfahrens kleinere Arbeits- und Belastungsschwankungen erreicht werden können.

In einer anderen Ausführungsform wird das Biomassenmaterial vor der Zuführung zur Füllvorrichtung fermentiert. Diese Ausführungsvariante hat unter anderem den Vorteil, dass das Biomassenmaterial in einen physischen Zustand gebracht wird, welcher die Herstellung von erfindungsgemässen Pellets besonders begünstigt (so können die Energieaufwendungen reduziert werden, weil bei der Fermentierung eine die Reibung vermindernde Schleimbildung stattfindet). Insbesondere kann durch diese Massnahme auch die Verdickung, sowie das Aufrollen des Biomassenmaterials vereinfacht und beschleunigt werden.

In einer wieder anderen Ausführungsform wird die Verdichtung des Biomassenmaterials durch das Fördermittel dank mindestens einer Durchmesserreduktion der Fördermittelführungselemente realisiert. Der Vorteil dieser Ausführungsform liegt insbesondere darin, dass keine aktiven Verdickungs- bzw. Pressmittel notwendig sind, um die erfindungsgemässen Pellets herzustellen. So kann das Biomassenmaterial durch das Fördermittel zugleich befördert und zu einer festen Masse verarbeitet werden.

In einer weiteren Ausführungsform wird bei der Verdichtung des Biomassenmaterials Wärme derart aufgebaut, dass die Verdichtung des Biomassenmaterials beschleunigt und verbessert wird. Diese Ausführungsvariante hat insbesondere den Vorteil, dass das Verdickungsverfahren weiter erleichtert wird. Ausserdem erzeugt die Wärme einen thermischen Effekt in der Biomasse, wodurch die Bindung des Biomassenmaterials zu einem wurstförmigen Profil weiter verstärkt wird.

An dieser Stelle soll festgehalten werden, dass sich die vorliegende Erfindung neben dem oben genannten erfindungsgemässen Verfahren zur Herstellung von Brennstoffformelementen aus Biomassenmaterial auch auf eine entsprechende Vorrichtung und ein entsprechendes System zur Herstellung von Brennstoffformelementen, sowie auf die entsprechenden Brennstoffformelemente aus Biomassenmaterial selbst bezieht.

Was die Vorrichtung angeht, so ist diese gemäss dadurch gekennzeichnet, dass es sich beim Fördermittel um eine Förderschnecke handelt, deren Schneckengewinde an ihrem austrittseitigen Ende mit einer schrägen Fläche ausläuft, wobei diese Fläche vorzugsweise unter einem Winkel im Bereich von 30-60°, insbesondere bevorzugt im Bereich von 40-50°, ganz besonders bevorzugt circa 45° zur Achse der Förderschnecke geneigt ist.

Weiterhin bevorzugt ist die Vorrichtung dadurch gekennzeichnet, dass einerseits die Förderschnecke auf der Eintrittseite einen ersten Abschnitt aufweist, in welchem die Schneckengewindelemente einen ersten grösseren Aussen-Durchmesser aufweisen als der zweite Aussen-Durchmesser in einem zweiten Abschnitt, welcher an der Austrittseite angeordnet ist, wobei vorzugsweise der erste Aussen-Durchmesser im Bereich von 30-80 mm, bevorzugt im Bereich von 40-60 mm liegt, und der zweite Aussen-Durchmesser vorzugsweise im Bereich von 10-40 mm, insbesondere bevorzugt im Bereich von 20-30 mm, und andererseits dass die Brennstoffformelemente von einem einzigen Fördermittel gefördert durch eine einzige Austrittsdüse heraustretend gebildet werden. Nach der Erfindung ist weist diese Austrittsdüse wenigstens in Förderrichtung einen ersten hohlen Abschnitt auf sowie einen zweiten hohlen Abschnitt, wobei der Durchmesser des ersten hohlen Abschnittes grösser ist als der Durchmesser des zweiten hohlen Abschnittes, und wobei wenigstens bereichsweise der erste Aussendurchmesser von Schneckengewindelementen im ersten Abschnitt nur unwesentlich geringer ist als der Innendurchmesser des ersten hohlen Abschnittes, in welchem diese Schneckengewindelemente laufen, und wenigstens bereichsweise der zweite Aussendurchmesser von Schneckengewindelementen im zweiten Abschnitt nur unwesentlich geringer ist als der Innendurchmesser des zweiten hohlen Abschnittes.

### KURZE BESCHREIBUNG DER ZEICHNUNGEN

Nachfolgend werden die Ausführungsvarianten der vorliegenden Erfindung anhand von Beispielen beschrieben. Die Beispiele der Ausführungen werden durch folgende beigelegte Figuren illustriert:
- Figur 1: zeigt eine schematische Seitenansicht eines Systems zur Herstellung von Brennstoffformelementen aus Biomassenmaterial gemäss einer Ausführungsform der Erfindung.
- Figur 2: zeigt eine perspektivische schematische Darstellung einer Vorrichtung zur Herstellung von Brennstoffformelementen aus Biomassenmaterial gemäss einer Ausführungsform der Erfindung.
- Figur 3: zeigt eine schematische Draufsicht einer Vorrichtung zur Herstellung von Brennstoffformelementen aus Biomassenmaterial gemäss einer Ausführungsform der Erfindung.
- Figur 4: zeigt eine schematische seitliche Querschnittansicht einer Vorrichtung zur Herstellung von Brennstoffformelementen aus Biomassenmaterial gemäss einer Ausführungsform der Erfindung.
- Figur 5: zeigt eine perspektivische Darstellung eines Förderungsmittels (einer Welle mit einem Schneckengewinde) der Vorrichtung zur Herstellung von Brennstoffformelementen aus Biomassenmaterial gemäss einer Ausführungsform der Erfindung.
- Figur 6: zeigt eine schematische seitliche Querschnittansicht eines Teils der Vorrichtung zur Herstellung von Brennstoffformelementen aus Biomassenmaterial, in welcher die Endregion des Förderungsmittels aus Figur 5 dargestellt ist.
- Figur 7: zeigt eine perspektivische Darstellung eines Teils der Vorrichtung zur Herstellung von Brennstoffformelementen aus Biomassenmaterial gemäss einer Ausführungsform der Erfindung, in welcher detailliert die Region des Schneidewerkzeugs dargestellt ist.
- Figur 8: zeigt in einem weiteren Ausführungsbeispiel eine Vorrichtung, bei welcher vier parallele Einheiten zur Erzeugung der Brennstoffformelemente an einem einzigen Einfülltrichter angeordnet sind, wobei in a) und b) jeweils perspektivische Ansichten dargestellt sind, in c) eine Ansicht von der Seite, in d) eine Ansicht von oben und in e) eine Ansicht von vorn.
- Figur 9: zeigt in a) ein Schneckengewinde als Fördermittel mit Austrittsdüse und in b) den entsprechenden Schnitt entlang der Linie A-A wie in Figur 9 a) angegeben.
- Figur 10: zeigt in a) die Förderschnecke nach Figur 9 in einer detaillierten Ansicht in einer ersten Rotationsposition und in b) in einer zweiten, um 90° gedrehten Rotationsposition, sowie in c) in einer perspektivischen Ansicht; und
- Figur 11: Fotografie auf einen Schnitt eines in der erfindungsgemäßen Vorrichtung nach dem erfindungsgemäßen Verfahren erzeugten Pellets.

### AUSFÜHRUNGSFORMEN DER ERFINDUNG

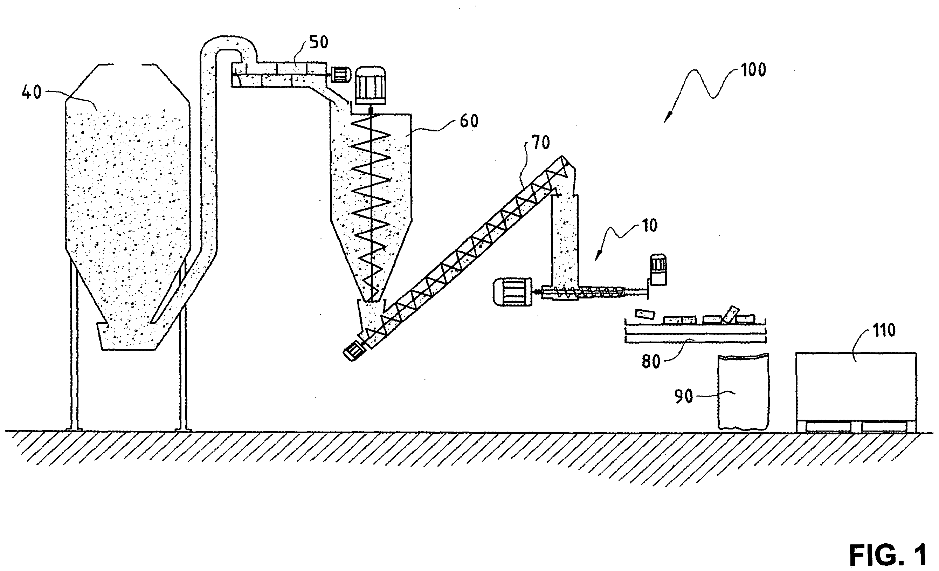

In Figur 1 wird ein erfindungsgemässes System zur Herstellung von Brennstoffformelementen aus Biomassenmaterial gemäss einer Ausführungsform der Erfindung dargestellt. Die Brennstoffformelemente dieser oder ähnlicher Art werden im deutschen Sprachraum oft auch Pellets genannt. Deshalb werden diese beiden Bezeichnungen nachfolgend im gleichen Sinne verwendet.

In Figur 1 bezieht sich das Bezugszeichen 10 auf die Vorrichtung zur Herstellung von Brennstoffformelementen (Pellets) aus Biomassenmaterial gemäss einer Ausführungsform der Erfindung, welche weiter unten detailliert beschrieben wird. Das Bezugszeichen 40 in Figur 1 bezieht sich auf einen Speicher, in welchem das zur Herstellung von erfindungsgemässen Brennstoffformelementen benötigte Biomassenmaterial zwischengespeichert werden kann. Dieser Speicher kann insbesondere als ein Silo bzw. Hochsilo aufgebaut werden, so dass er von oben aufgefüllt werden kann, während das Biomassenmaterial von unten entnommen werden kann. Es sind aber selbstverständlich auch andere Speicher möglich, solange das Biomassenmaterial darin bis zur Verarbeitung aufbewahrt werden kann. Des Weiteren beziehen sich das Bezugszeichen 50 auf einen Wirbelmischer, und das Bezugszeichen 60 auf einen Vertikalmischer, welche das aus dem Speicher 40 entnommene Biomassenmaterial zur Herstellung von Pellets aufnehmen und derart mischen können, dass eine homogene Mischmasse entsteht. Insbesondere kann durch den Einsatz der beiden Mischer 50 und 60 gewährleistet werden, dass das Biomassenmaterial zu einer homogenen Mischung verarbeitet wird. Aus dem Vertikalmischer 60 wird das Biomassenmaterial mittels einer Dosierschnecke 70 entnommen und der Vorrichtung zur Herstellung von Pellets 10 aus Biomassenmaterial zugeführt. Diese Dosierschnecke 70 ermöglicht vor allem auch, dass die Menge des Biomassenmaterials, welches in die Vorrichtung zur Herstellung von Brennstoffformelementen aus Biomassenmaterial 10 eingefüllt wird, sowie die entsprechende Füllgeschwindigkeit aufs Genauste dosiert und kontrolliert werden können. Die fertigen Pellets werden aus der Vorrichtung zur Herstellung der Brennstoffformelemente aus Biomassenmaterial 10 ausgestossen und anschliessend auf eine Trocknungsunterlage 80 gebracht, um getrocknet zu werden. Die Brennstoffformelemente aus Biomassenmaterial können nach dem Verlassen der Vorrichtung 10 entweder direkt durch die Wirkung der Schwerkraft auf die Trocknenunterlage 80 fallen, oder aber mittels einer geeigneten Beförderungsvorrichtung (z.B. eines Förderbands) zur Trocknenunterlage 80 zugeführt worden. Es sind aber grundsätzlich auch andere Lösungen denkbar, bei welchen die fertigen Brennstoffformelemente aus Biomassenmaterial beispielsweise zunächst durch eine in der Vorrichtung zur Herstellung von Brennstoffformelementen aus Biomassenmaterial 10 integrierte Trocknungskammer bzw. -anlage durchgelassen werden, bevor sie dann direkt verpackt und gelagert werden. Die fertigen Pellets können in den geeigneten Lagerungsvorrichtungen gelagert werden, beispielsweise in den so genannten Big-Bags 90 oder Palettenboxen 110. Selbstverständlich können aber auch viele andere Lagerungsvorrichtungen und -methoden verwendet werden, ohne dass vom erfinderischen Grundgedanken abgewichen wird.

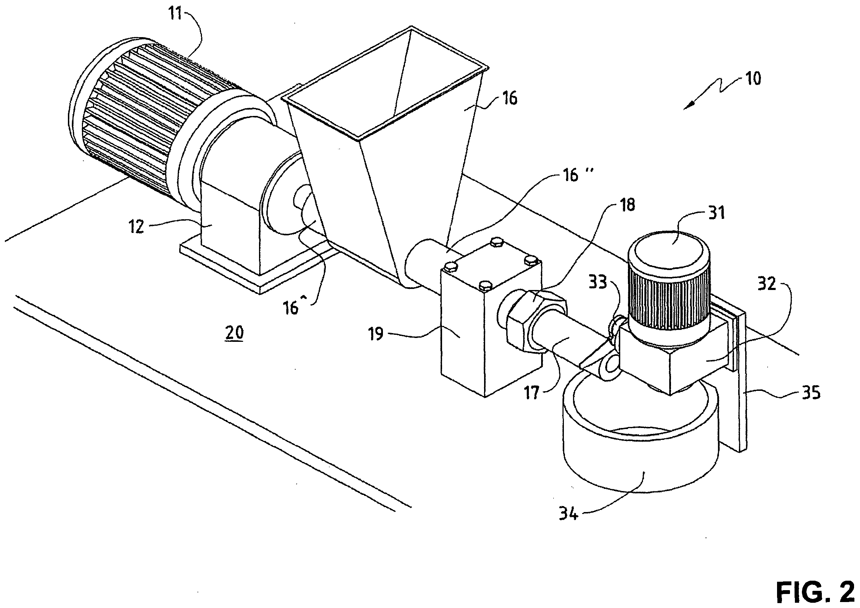

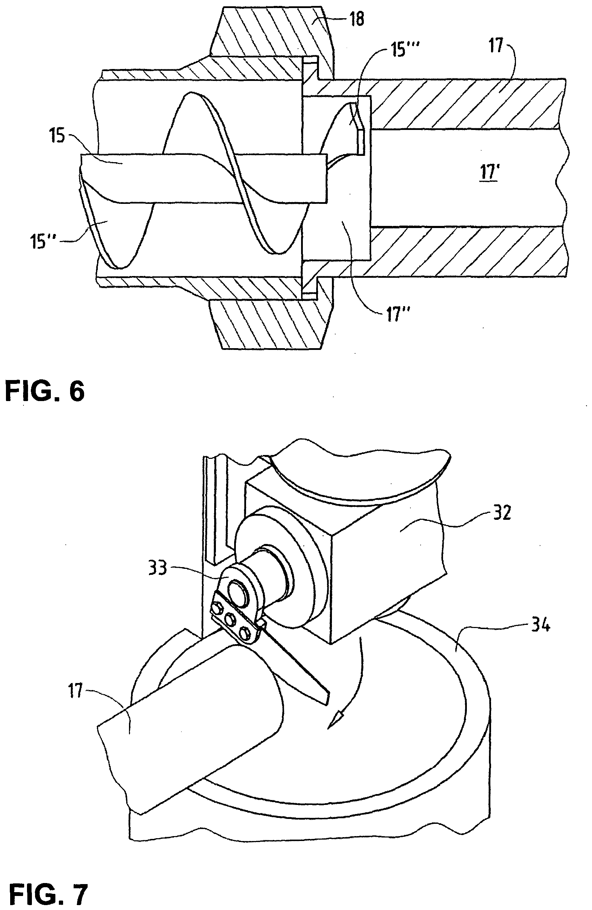

Figur 2 illustriert in einer schematischen perspektivischen Ansicht die Vorrichtung zur Herstellung von Brennstoffformelementen aus Biomassenmaterial 10 gemäss einer Ausführungsform der Erfindung. In Figur 2 bezieht sich das Bezugszeichen 11 auf einen Motor, mittels welchem die Welle mit einem Schneckengewinde (nicht dargestellt) angetrieben wird. Grundsätzlich eignen sich Elektromotore für diese Aufgabe sehr gut, wobei selbstverständlich auch andere Motorenarten in Frage kommen können. Ebenfalls können Motoren verschiedener Stärken und/oder Leistungen verwendet werden, solange die Welle mit dem Schneckengewinde derart in Bewegung gesetzt werden kann, dass die Brennstoffformelemente aus Biomassenmaterial mit gewünschten Eigenschaften hergestellt werden können. Auch kann der Motor 11 mit einer besonderen Steuerungseinheit (auch nicht dargestellt) verbunden werden, mittels welcher der Motor 11 angesteuert und kontrolliert werden kann. Der Motor 11 schliesst unmittelbar an ein Gestell 12 an, welches sich auf der Grundplatte 20 befindet, und welches über einen ersten hohlen Verbindungsteil 16' mit der Füllvorrichtung bzw. Füllkammer 16 verbunden ist. Die Füllvorrichtung 16 hat im Wesentlichen die Form eines Trichters, in welchen das Biomassenmaterial zur Herstellung der Brennstoffformelemente mittels der Dosierschnecke 70 aus Figur 1 (oder einer anderen geeigneten Befüllvorrichtung) eingefüllt werden kann.
Die Füllvorrichtung bzw. -kammer 16 ist über einen zweiten hohlen Zwischenteil 16" mit der Austrittsdüse 17 verbunden, wobei dieser zweite hohle Zwischenteil 16" durch einen mit der Grundplatte 20 verbundenes Unterstützungselement 19 getragen ist. Die Verbindung zwischen dem zweiten hohlen Zwischenteil 16" und der Austrittsdüse 17 ist mittels einer Spannschraube 18 gesichert. Es ist selbstverständlich klar, dass diese Verbindung auch durch andere ähnliche Mittel gesichert werden kann, ohne dass die Erfindung in ihren wesentlichen Zügen abgeändert würde. Das Biomassenmaterial wird zwischen der Füllkammer 16 und der Austrittsdüse 17 derart verarbeitet, dass am Ausgang der Austrittsdüse 17 eine im Wesentlichen homogene und feste wurstförmige Masse ausgestossen wird, aus welcher anschliessend die einzelnen Pellets durch Schneiden hergestellt werden. Diese Austrittsdüse 17 kann ausserdem nach Belieben ausgewechselt werden, insbesondere um Brennstoffformelemente aus Biomassenmaterial mit gewissen physischen Eigenschaften (wie z.B. die Dicke) zu erreichen. Die Details zur Funktion der Austrittsdüse 17 werden weiter unten gegeben. An dieser Stelle soll erwähnt werden, dass der erste und der zweite Zwischenhohlteil 16' und 16", sowie die Austrittsdüse 17 zusammen die Anordnung der Fördermittelführungselemente bilden, im Inneren welcher sich das Fördermittel 15 befindet. Diese Fördermittelführungselemente 16', 16" und 17 weisen in der Bewegungsrichtung des Biomassenmaterials jeweils einen sich verkleinernden Durchmesser auf. Dadurch kann insbesondere gewährleistet werden, dass das Biomassenmaterial, welches mittels des Fördermittels 15 von der Füllkammer 16 bis zur Austrittsdüse 17 verfrachtet wird, gut verdickt und zu einer kompakten Masse verarbeitet wird, so dass die produzierten Pellets eine hohe Festigkeit aufweisen.
Die Schneideanordnung 30 schliesst die Vorrichtung zur Herstellung von Pellets aus Biomassenmaterial 10 ab. Mittels dieser Schneideanordnung 30 werden die einzelnen Brennstoffformelemente aus Biomassenmaterial nach dem Austritt des verarbeiteten Biomassenmaterials in der Form einer länglichen, festen und kompakten Wurst aus der Austrittsdüse 17 durch das Schneiden hergestellt. Die Schneideanordnung 30 umfasst dabei einen Motor 31, welcher das rotierende Schneidewerkzeug 33 betreibt. Dieser Motor 31 ist mit dem Schneidewerkzeug 33 über ein Gestell 32 verbunden, wobei dieses Gestell 32 seinerseits über ein Unterstützungselement 35 an der Grundplatte 20 fixiert ist. Eine Schale 34 fängt die geschnittenen Pellets ab und führt sie anschliessend aus der Vorrichtung zur Herstellung von Brennstoffformelementen aus Biomassenmaterial 10 aus. Der Motor 31 kann ebenfalls mit einer Steuerungsvorrichtung (nicht dargestellt) verbunden werden, so dass unter anderem auch die Rotationsgeschwindigkeit des Schneidewerkzeugs 33 angepasst und kontrolliert werden kann. Durch die Änderung der Rotationsgeschwindigkeit des Schneidewerkzeugs 33 kann insbesondere die Länge der einzelnen Brennstoffformelemente kontrolliert und gesteuert werden. An dieser Stelle möchten wir betonen, dass die Schneideanordnung 30 grundsätzlich auch eine andere Struktur auf weisen kann, ohne dass dadurch vom Grundgedanken der Erfindung abgewichen würde, solange mittels dieser Schneideanordnung die einzelnen Pellets mit gewünschten Eigenschaften (d.h. insbesondere mit der gewünschten Länge) hergestellt werden können. Eine detaillierte schematische perspektivische Ansicht der Schneideanordnung 30 wird in Figur 7 gegeben.

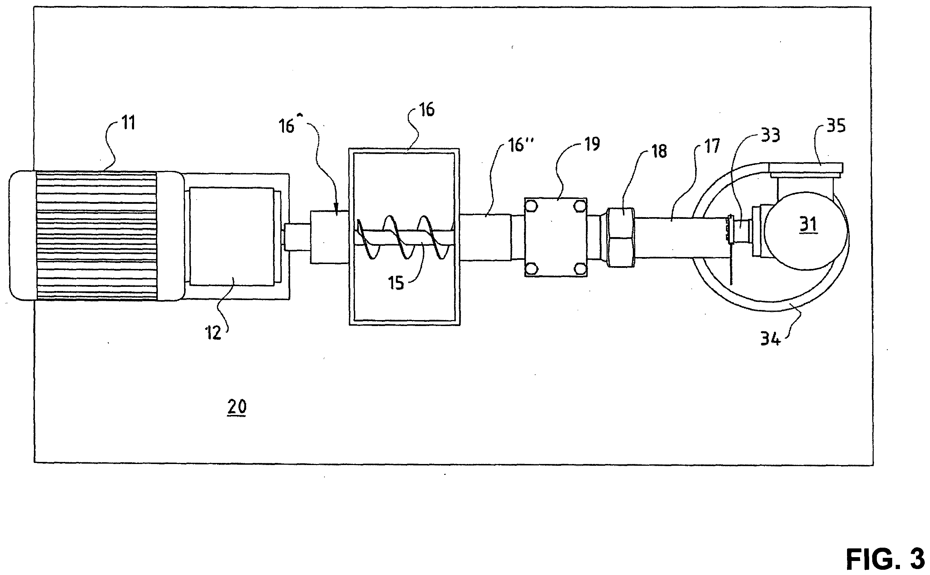

In Figur 3 wird eine schematische Draufsicht der Vorrichtung zur Herstellung von Brennstoffformelementen aus Biomassenmaterial 10 aus Figur 2 gezeigt. Grundsätzlich werden in Figur 3 nochmals alle Elemente der Vorrichtung 10 gezeigt, welche bereits in Figur 2 beschrieben worden sind. Deshalb tragen die Elemente aus Figur 2, welche in Figur 3 wiederholt werden, dieselben Bezugszeichen wie in Figur 2. Aus diesem Grund wird an dieser Stelle auch darauf verzichtet, eine erneute detaillierte Beschreibung aller dieser Elemente noch einmal zu geben.
In Figur 3 wird jedoch ersichtlich, dass sich das Fördermittel 15 im Innern der Fördermittelführungselemente 16', 16", 17 (d.h. im Innern des ersten hohlen Zwischenteils, des zweiten hohlen Zwischenteils und der Austrittsdüse) befindet. Die Füllvorrichtung 16 weist an ihrem unteren Ende eine Öffnung auf, durch welche das eingefüllte Biomassenmaterial vom Fördermittel 15 erfasst und zur Austrittsdüse 17 verfrachtet werden kann. Auf dem Weg von der Füllkammer 16 bis zur Austrittsdüse 17 wird das Biomassenmaterial einer physischen und thermischen Verarbeitung unterzogen, so dass das Biomassenmaterial beim Austritt aus der Austrittsdüse 17 eine homogene und feste Masse bildet, welche anschliessend durch das Schneidewerkzeug 33 zu einzelnen Pellets geschnitten wird.

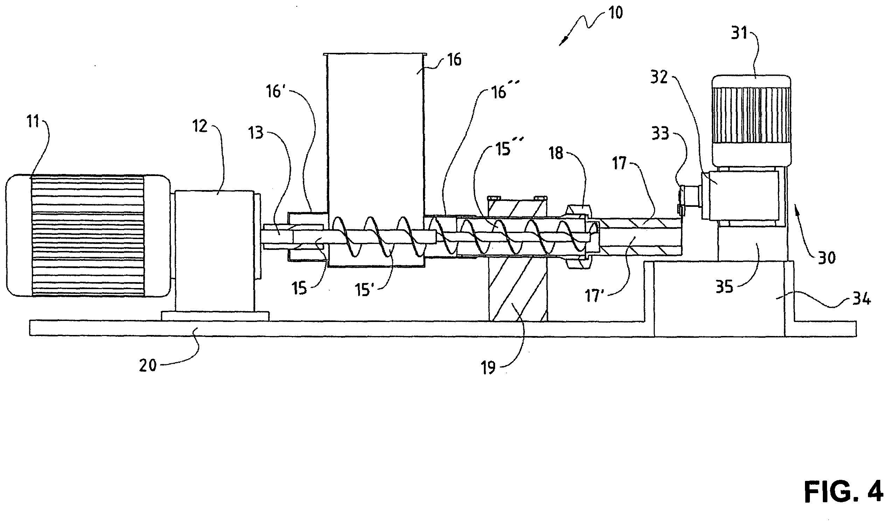

Die Funktionsweise der Vorrichtung zur Herstellung von Brennstoffformelementen aus Biomassenmaterial 10 wird aus Figur 4 ersichtlich, in welcher eine schematische Querschnittansicht durch diese Vorrichtung 10 gezeigt wird. Es werden erneut dieselben Elemente wie in Figur 2 und 3 gezeigt, und auch erneut mit denselben Bezugszeichen versehen. Deshalb wird nun ebenfalls darauf verzichtet, eine detaillierte Beschreibung aller dieser Elemente zu wiederholen.

In Figur 4 wird die Struktur der Fördermittelführungselemente 16', 16", 17 klar ersichtlich. Diese hohlen Führungselemente nehmen das Fördermittel 15 auf, welches dank dem Motor 11 darin leicht rotieren kann. Allerdings verkleinert sich der Durchmesser jedes der Bewegungsrichtung folgenden Abschnitts, so dass das mitgeführte Biomassenmaterial während dieser Bewegung verdichtet wird (in Figur 4 ist die Bewegungsrichtung des Biomassenmaterials von links nach rechts, bzw. von der Füllvorrichtung 16 zur Austrittsdüse 17 hin).

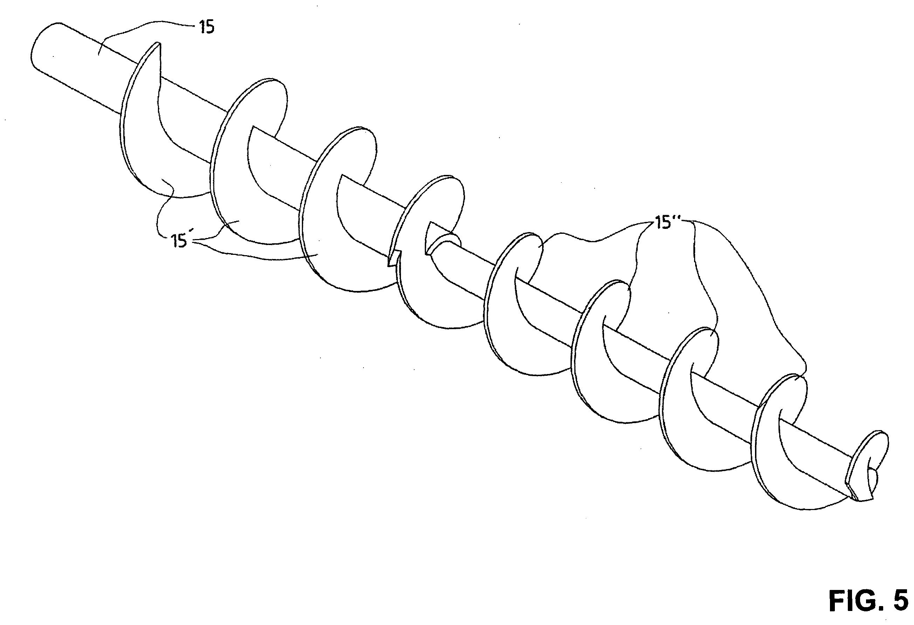

In Figur 5 wird eine perspektivische schematische Ansicht des Fördermittels 15 gezeigt. Das Fördermittel 15 gemäss einer Ausführungsform der Erfindung ist eine Welle mit einem Schneckengewinde. Dieses Schneckengewinde weist in der Bewegungsrichtung des Biomassenmaterials eine Verjüngung des Durchmessers auf. So befinden sich im ersten Abschnitt der Welle die Schneckengewindeelemente 15' mit einem grösseren Durchmesser als die Elemente 15", welche sich weiter unten befinden. Beispielsweise kann der Durchmesser beim ersten Abschnitt 70 mm betragen, während im unteren Abschnitt ein Durchmesser von lediglich 25 mm gewählt werden kann. Durch diese Reduktion entsteht ein zusätzlicher Widerstand und erhöhte Reibung, wodurch eine Verdichtung des Biomassenmaterials erreicht wird. Ausserdem entsteht durch die Reibung Wärme, welche auf das Biomassenmaterial so wirkt, dass im Biornassenmaterial auch chemische Veränderungen stattfinden, welche die Verdichtung beschleunigen und begünstigen können. Ausserdem hat der erste Abschnitt 15' einen zylindrischen Querschnitt, so dass das Biomassenmaterial selbst zu einem Konus aufgebaut wird. Somit wird der Verschleiss am Mantelrohr wesentlich reduziert. Durch diese Verjüngung kann ausserdem gewährleistet werden, dass das Fördermittel 15 innerhalb der Fördermittelführungselemente 16', 16", 17 genügend Platz hat.

Schliesslich erreicht dieses verdichtete Biomassenmaterial die Austrittsdüse 17. Die Struktur dieser Austrittsdüse 17 wird detailliert in Figur 6 dargestellt. Die Austrittsdüse 17 umfasst einen ersten hohlen Abschnitt 17", sowie einen zweiten hohlen Abschnitt 17'. Der Innendurchmesser im ersten hohlen Abschnitt 17", in welchem die Förderschnecke läuft, beträgt circa 25 mm. Der Innendurchmesser im zweiten hohlen Abschnitt 17', in welchen die Förderschnecke nicht eingreift, ist kleiner, typischerweise 5-10 mm, vorzugsweise im Bereich von 6-8 mm kleiner als der Durchmesser im ersten hohlen Abschnitt 17". Die Stufe zwischen dem ersten und dem zweiten Abschnitt ist vorzugsweise als rechteckige Stufe ausgebildet. Bei der Führung des Prozesses ist typischerweise die Temperatur im Bereich dieser Stufe bei circa 100-120°C. Dabei weist der erste hohle Abschnitt 17" einen grösseren Durchmesser als der zweite hohle Abschnitt 17' auf, wodurch eine zusätzliche Verdichtung des Biomassenmaterials bewirkt wird. Schliesslich ist das Ende des Fördermittels 15 derart aufgebaut, dass das Schneckengewinde mit einer schrägen Fläche von ca. 45° ausläuft. Diese schräge Fläche bewirkt das Aufrollen des verdichteten Biomassenmaterials vor der letzten Reduktion und Verdichtung und ermöglicht dadurch eine wesentlich höhere Stabilität des Brennstoffformelements.

Zusammenfassend kann gesagt werden, dass die erfindungsgemässen Brennstoffformelemente wesentliche Vorteile gegenüber den herkömmlichen Holz-Pellets aufweist. So sind die erfindungsgemässen Pellets viel bruchfestsicherer als die herkömmlichen Brennstoffformelemente, so dass sie auch bei extremen Bedingungen im Transport oder Gebrauch nicht auseinander fallen und damit auch keinen Feinstaub produzieren. Somit kann die Umweltbelastung bereits um ein Vielfaches reduziert werden. Ausserdem können verschiedenste Arten und Kombinationen von Biomassen-Abfällen für die Herstellung von erfindungsgemässen Brennstoffformelementen verwendet werden.

So können auch solche Pellets hergestellt werden, welche genau an die Anforderungen der Benutzer angepasst sind (z.B. im Bezug auf die Dicke, Länge, den Heizwert, den Aschenanteil, etc.). Zudem werden die erfindungsgemässen Pellets mit Biomassenmaterial in feuchtem Zustand produziert, wodurch der Energieverbrauch im Vergleich zur Herstellung von herkömmlichen Pellets wesentlich vermindert werden kann. Schliesslich ist die Herstellung von erfindungsgemässen Pellets viel günstiger, denn die Pellets können dort produziert werden, wo der Biomassen-Abfall entsteht. Somit entfallen die Transportkosten und die Umweltbelastung vollkommen. In einer Ausführungsform können die geschnittenen Pellets auch in der Sonne getrocknet werden, da ja der grösste Anteil an Biomassen-Abfall grundsätzlich im Sommer anfällt. Allerdings kann beispielsweise auch die durch den Betrieb der Vorrichtung 10 entstehende Wärme zum Trocknen der geschnittenen Brennstoffformelemente verwendet werden. Dadurch kann der Energieverbrauch noch weiter gesenkt werden.

Zum Schluss sei darauf hingewiesen, dass die beispielhaft beschriebenen Ausführungsformen nur eine Auswahl an möglichen Realisierungen der erfindungsgemässen Gedanken darstellen und keinesfalls als limitierend angeschaut werden sollen. Der Fachmann wird verstehen, dass viele andere Implementierungen der Erfindung möglich sind, ohne dass die wesentlichen Merkmale der Erfindung vernachlässigt werden.

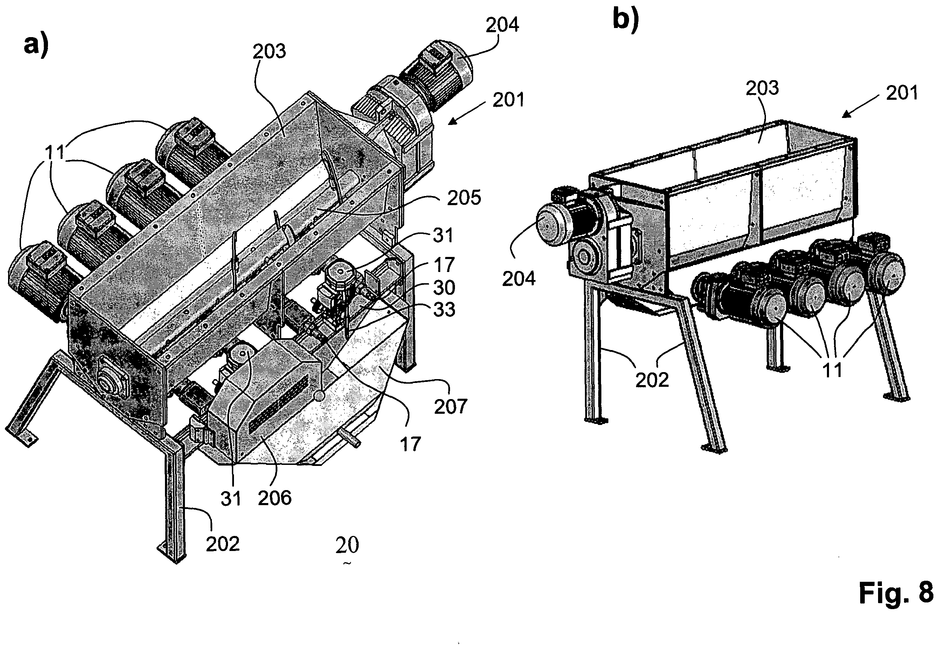

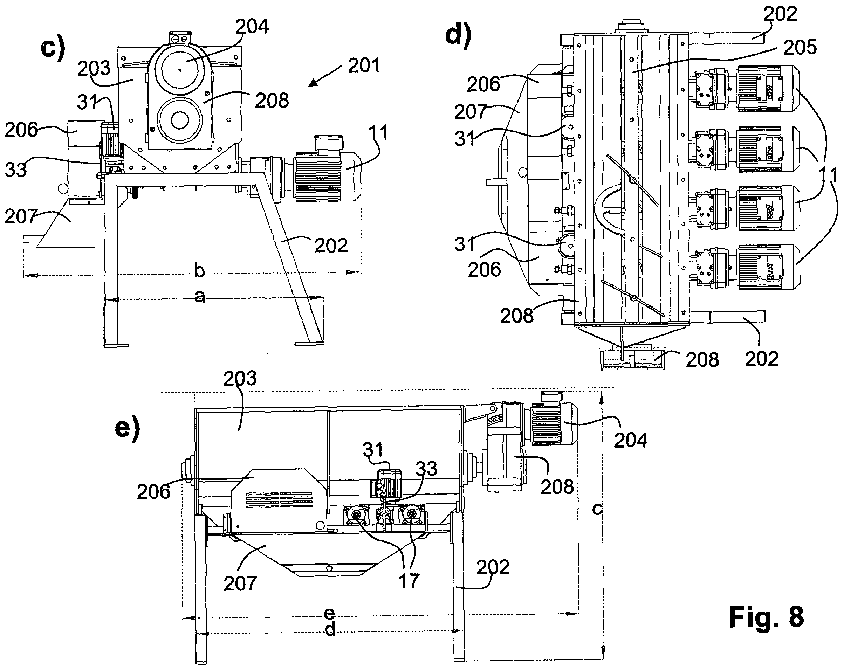

In Figur 8 ist ein weiteres Ausführungsbeispiel dargestellt, bei welchem mehrere Einheiten zur Herstellung von Brennstoffformelementen an einer einzigen Füllvorrichtung angeschlossen sind. Konkret ist eine gemeinsame Füllvorrichtung 203 in Form eines länglichen Troges angeordnet, welcher nach oben offen ist und nach unten verjüngend ausgebildet ist. Im unteren verjüngenden Bereich ist in diesem länglichen Element 203 parallel zur Längsrichtung von diesem eine Einführungshilfe 205 angeordnet. Es handelt sich dabei um eine Welle, an welcher bügelförmige Elemente angeordnet sind, die dazu dienen, von oben eingefülltes Material nach unten zum am Ende des verjüngenden Bereiches angeordneten Austrittsschlitz zu befördern und gegebenenfalls dabei auch noch zu zerkleinern. Die bügelförmigen Elemente können zu diesem Zweck auch mit Schneidflächen ausgestattet sein. Die Elemente sind an einer Welle angeordnet und diese Welle ist drehbar gelagert und durch einen Motor 204 angetrieben. Der Antrieb des Motors wird über eine Getriebeeinheit 208 auf die Welle übertragen.

Unterhalb des Austrittsschlitzes der gemeinsamen Füllvorrichtung 203, die auf einem Ständer 202 montiert ist, sind nun in diesem konkreten Beispiel vier Einheiten angeordnet, welche parallel Brennstoffformelemente (Pellets) herstellen. Diese Einheiten sind parallel mit ihren horizontalen und parallelen Achsen senkrecht zur Längsachse der gemeinsamen Füllvorrichtung 203 angeordnet. Jede Einheit verfügt über einen Motor 11, jeweils zwei Einheiten verfügen aber nur über eine Schneideanordnung 30, welche zwischen jeweils zwei Austrittsdüsen 17 angeordnet ist und einen Motor 31 aufweist. Der Motor treibt ein Schneidwerkzeug in Form eines Schneidmessers mit zwei gegenüberliegenden rotierenden Klingen ausgebildet, und ist genau so angeordnet, dass die gegenüberliegenden Klingen gleichzeitig aus jeweils zwei benachbart angeordneten Austrittsdüsen 17 austretendes Material zu einzelnen Pellets abtrennen. Mit anderen Worten liegen die Achsen der zwei nebeneinander angeordneten Austrittsdüsen 17 sowie die Drehachse der die Klingen 33 rotierenden Welle in einer Ebene und bevorzugtermassen in gleichmässigem Abstand, wie dies insbesondere aus Figur 8e) ersichtlich ist.

Unterhalb dieser Austrittsdüsen 17 ist ein Auffangtrichter 207 angeordnet. Er vereinigt die aus den vier parallelen Düsen 17 austretenden und durch die Schneideanordnungen abgetrennten Pellets zu einem einzigen Strom von Brennstoffformelementen. Da bei der Rotation der Klinge 33 auch jeweils bei einer von zwei nebeneinander angeordneten Austrittsdüsen 17 ein Moment nach oben erzeugt wird, verfügt dieser Trichter 207 jeweils über eine Abdeckung 206, welche in Figur 8a) nur auf der linken Seite angeordnet ist und auf der rechten zur besseren Sichtbarkeit der Schneidanordnung 30 entfernt ist.

Eine solche Einheit 201 kann sehr kompakt und trotzdem mit hohem Durchsatz ausgebildet sein. So verfügt eine solche Einheit bspw. über eine Bautiefe a des Gestells von weniger als einem Meter, bspw. ca. 90 cm, und über eine gesamte Bautiefe b von weniger als 1.5 m, bspw. im Bereich von 1.35 m.

Eine solche Einheit verfügt zudem über eine Gesamtbreite e im Bereich von weniger als 2 m, bspw. ca. 1.85 m, und das Gestell verfügt über eine Breite d von weniger als 1.5 m.

Aus dieser Dimensionierung wird ersichtlich, wie eine solche Einheit sehr kompakt und trotzdem mit einem hohen Durchsatz zur Verfügung gestellt werden kann. Konkret kann ein Durchsatz von 25 bis 45 kg/h pro Extruder (bei mehreren Extrudern pro Einheit multipliziert sich der Ausstoss entsprechend) erreicht werden, normalerweise ideal sind ca. 30 kg/h. Eine schnelle, stabile und effiziente Pelleterzeugung ist z.B. möglich bei einer Mischung von 80% Pferdemist und 20% Getreideabfall.

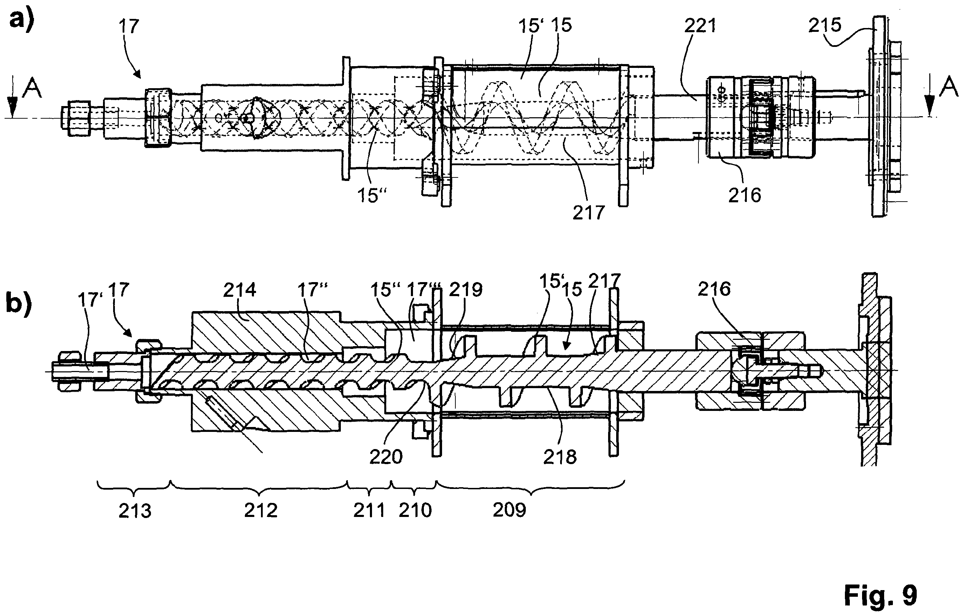

In Figur 9 ist eine Förderschnecke, wie sie im Zusammenhang mit Figur 8 zur Anwendung kommt, im Detail dargestellt. Dies in einer seitlichen Ansicht (a) und in einem Schnitt gemäss der Linie A-A in Figur 9a) b). Die eigentliche Förderschnecke 15 verfügt dabei über eine Welle 217, und über in Bereichen an diese angeformte Schneckengewindezüge.

Die Förderschnecke läuft in einem Kanal, welcher in Förderrichtung folgende Abschnitte aufweist: Den eigentlichen Eintrittsbereich 209, welcher an die gemeinsame Füllvorrichtung 203 resp. an deren unteren Schlitz anschliesst, und in welcher das zu verarbeitende Material in den Bereich der Förderschnecke geführt wird.

Anschliessend folgt eine erste Kammer 210, welche zwar einen ähnlichen Aussendurchmesser aufweist wie das Gehäuse im Eintrittsbereich, welche aber im Gegensatz zum nach oben offenen Eintrittsbereich 209 nun rundum geschlossen ist. Des Weiteren ist in diesem Bereich der ersten Kammer 210 das Gewinde der Förderschnecke bereits verjüngt und auf dem zweiten Radius 15".

Anschliessend folgt eine zweite verjüngte Kammer, das heisst eine Kammer, bei welcher der Innendurchmesser bereits stark reduziert ist, typischerweise wird hier der Durchmesser im Vergleich zur Kammer 210 um 30 bis 50% reduziert. In diesem Ausführungsbeispiel, welches übrigens nicht nur im Zusammenhang mit einer gemeinsamen Füllvorrichtung 203 wie in Figur 8 dargestellt zum Einsatz kommen kann ,sondern auch als einzelne Einheit, ist der Übergang zwischen der ersten Kammer 210 und der zweiten Kammer 211 in Form einer rechteckigen Stufe ausgebildet, diese Stufe kann aber auch abgerundet sein oder in Form einer konischen Verjüngung.

Anschliessend an diese zweite verjüngte Kammer 211 folgt ein langer Bereich der dritten Kammer 212, welcher dadurch gekennzeichnet ist, dass hier der Innendurchmesser dieses ersten hohlen Abschnitts 17" im Wesentlichen dem Aussendruchmesser der Schneckengewindeelemente 15" im zweiten Abschnitt entspricht.

Anschliessend folgt in jenem Bereich, wo die Förderschnecke resp. deren Gewindezüge auch zu Ende ist, eine weitere vierte verjüngte Kammer 17', in welcher das Material nochmals verpresst wird und anschliessend durch die eigentliche Austrittsöffnung der Düse 17 heraustritt.

Die eigentliche Aufrollung des Materials geschieht, so wird zumindest nach momentanen Wissensstand vermutet, insbesondere in dieser Endzone, dies aufgrund der spezifischen Ausbildung der vorderen Fläche der Förderschnecke sowie wenigstens teilweise auch aufgrund der weiteren Verjüngung des Durchflussquerschnitts in diesem Bereich. Die Aufrollung kommt dadurch zustande, dass durch eine einzige Förderschnecke ein einziger Strang durch eine einzige mit der Schnecke koaxiale und am Ende der Schnecke stufenartig verjüngte Öffnung gepresst wird, was in diesem Bereich, wo üblicherweise eine einzige Förderschnecke durch ein ganzes Sieb oder eine Matrix von Durchtrittsöffnungen presst, neu ist. Dieses Aufrollen kann grundsätzlich bei einem Pressen durch ein Sieb mit mehreren Öffnungen nicht zustande kommen.

Zur Ankopplung dieser Förderschnecke an den Motor ist einerseits an der Spitze gegenüberliegenden Ende das eigentliche Förderschneckenelement mit einem Kopplungsbereich 221 ausgestattet, in welchem bspw. ein Schlitz dafür vorgesehen ist, die Befestigung an einem Kupplungselement 216 zu erlauben. Das Kupplungselement seinerseits wird anschliessend mit einem Flansch 215 am eigentlichen Motor, resp. an einer Motoren- oder Getriebewelle befestigt.

Wie aus Figur 9 ersichtlich wird, läuft also die Förderschnecke (koaxial) in einem Kompressionsblock, welcher die eigentliche Austrittsdüse 17 bildet. Der Kompressionsblock verfügt über einen sich gestuft sukzessive verjüngenden Durchflussquerschnitt mit hohlen Abschnitten, durch welchen das Material sukzessive verdichtet wird. Um den Prozess optimal zu führen, wird in der Regel durch eine ggf. aktive Kühlung (Luftkühlung oder sogar Wasserkühlung) die aufgrund der Kompression entstehende Wärme soweit abgeführt, dass in diesem Bereich eine Temperatur im Bereich 100 bis 130°C, optimal im Bereich von 115 bis 125°C vorliegt.

Liegt die Temperatur ausserhalb dieses Fensters, so wird bei zu niedriger Temperatur keine genügende Bindungswirkung erzeugt, wird die Temperatur zu hoch zugelassen, so kann dies zu einer Verkohlung und ebenfalls zu einer schlechteren inneren Bindung der erzeugten Brennstoffformelemente Anlass geben.

Typischerweise wird die Feuchtigkeit in einem Bereich von 20 bis 35% eingestellt, bevorzugtermassen in einem Bereich von 26 bis 28%. Die gesamte Länge dieser Einheit, das heisst vom Beginn der Schnecke in Figur 9 auf der rechten Seite im Bereich 209 bis zur Spitze der Austrittsdüse ist ca. 350 mm. Diese Länge sollte typischerweise nicht mehr als +/- 30 mm von diesem Wert abweichen.

Die eigentliche Förderschnecke verfügt, wie bereits erläutert, über eine Welle 217. Diese Welle 217 verjüngt sich sukzessive in Förderrichtung, und zwar ist sie in einem ersten Bereich 218, das heisst spezifisch im Eintrittsbereich auf einem ersten Durchmesser, verjüngt sich anschliessend in Förderrichtung noch im Eintrittsbereich in einem konisch zulaufenden Bereich 219 auf einen Bereich 220 mit einem geringeren Durchmesser. Dieser Durchmesser wird anschliessend im Wesentlichen bis zur Spitze der Förderschnecke beibehalten.

Auch die Aussendruchmesser der Förderschnecken-Elemente oder Gewindezüge verändern sich in Förderrichtung sukzessive. Dies in diesem Fall in gestufter Weise, so ist im Bereich 209 in einem ersten Abschnitt diese Höhe der Schneckengewindeelemente auf einer ersten Höhe und nimmt anschliessend beim Übergang vom Bereich 209 in den Bereich 210 auf einen zweiten niedrigeren Wert im zweiten Abschnitt 15" ab.

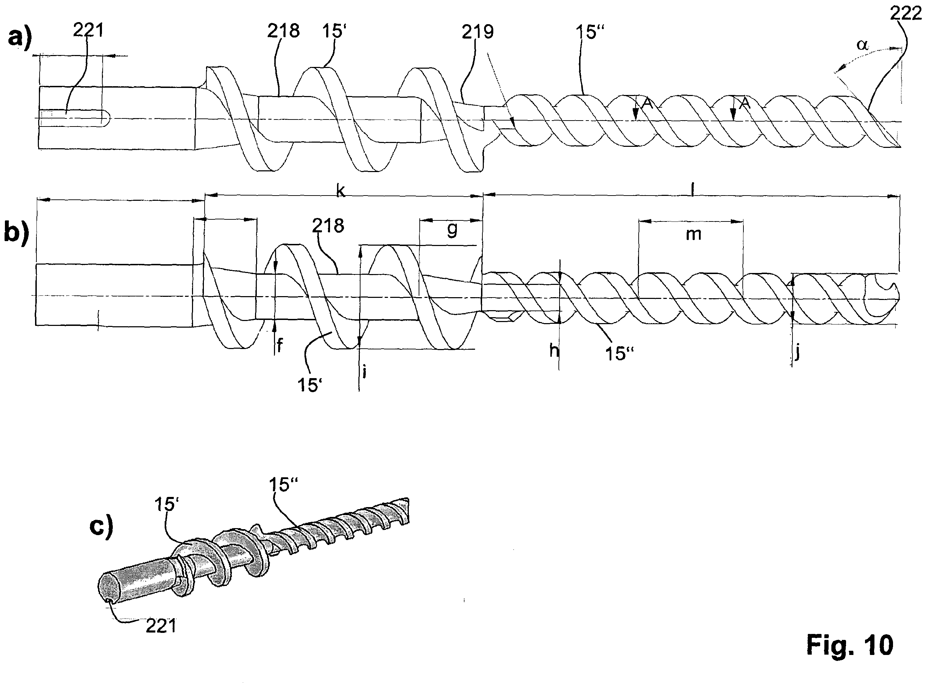

Der grosse Durchmesser im Bereich 15' ist, wie in Figur 10 mit dem Bezugszeichen i bezeichnet, typischerweise in einem Bereich von 50 bis 55 mm, optimal mit einer Schwankung von nicht mehr als 2 mm. Der Durchmesser im zweiten Bereich 15' wie in Figur 10 mit dem Bezugszeichen j angegeben ist typischerweise im Bereich von 24 bis 25 mm mit einer Schwankung von nicht mehr als +/- 0.5 mm. Die Länge k des Bereichs 15' ist typischerweise im Bereich von 100 bis 200 mm, normalerweise im Bereich von 130 bis 150 mm, und die Länge des Bereichs 15" ist typischerweise im Bereich von 150 bis 300 mm, bevorzugtermassen im Bereich von 180 bis 220 mm.

Der Durchmesser der Welle im Bereich 218 ist, wie in Figur 10 mit dem Bezugszeichen f angegeben, normalerweise im Bereich von 20 bis 24 mm, und der Durchmesser 220 im Bereich von 10 bis 15 mm.

Generell wird bevorzugt, dass, wie aus Figur 10 ersichtlich ist, im ersten Bereich 15' ein Schneckengewinde mit nur einem Kamm vorliegt, und anschliessend im zweiten Bereich 15" ein Schneckengewinde mit zwei parallel und um 180° versetzt verlaufenden Kämmen im Sinne einer Doppelhelix. Die Steigung m ist bevorzugtermassen hingegen in beiden Bereichen gleich und in diesem spezifischen Ausführungsbeispiel im Bereich von 45 bis 55 mm, spezifisch gewählt wurde 50 mm, der Winkel sollte in einem Bereich von +/- 2° liegen.

Ebenfalls aus Figur 10 erkennbar ist die für das Aufrollen sehr wichtige schräge Fläche am Ende der Förderschnecke. Der Winkel a, welcher zwischen der Hauptachse der Förderschnecke und dieser Ebene, liegt, im Bereich von typischerweise 42° +/- 3°.

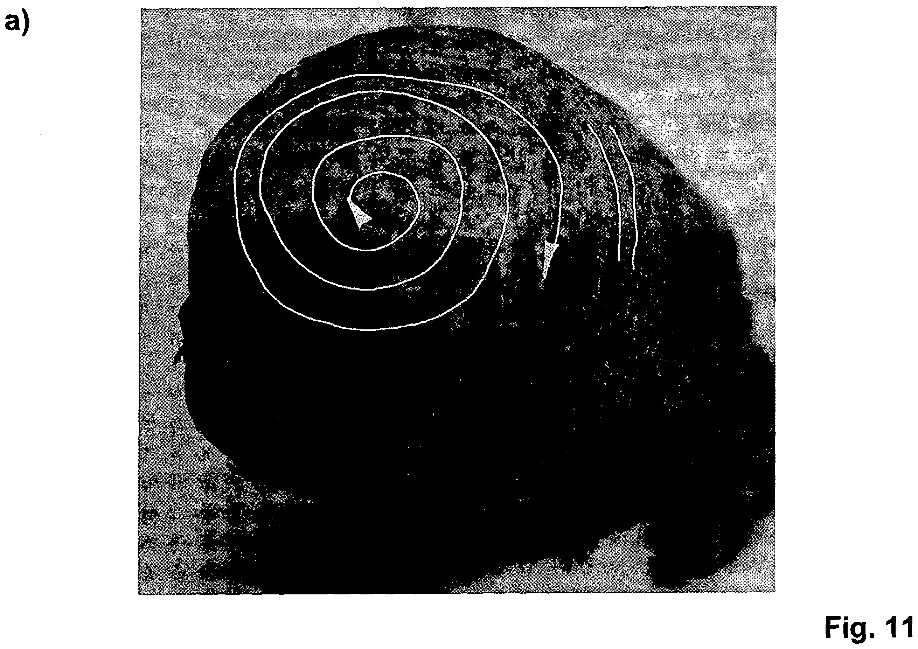

In Figur 11 ist eine Fotografie eines nach diesem Verfahren erzeugten Pellets dargestellt. Mit einer Hilfslinie ist angezeigt, wie sich die Struktur in einem Schnitt senkrecht zur Achse aufgerollt darstellt, zusätzlich sind diese umlaufenden Fasern aber auch noch in axialer Richtung geneigt, was zu oben erläuterten zweidimensionalen und besonders vorteilhaften Armierung führt.

### BEZUGSZEICHENLISTE

- 10: Vorrichtung zur Herstellung von Brennstoffformelementen (Pellets)
- 11: Motor
- 12: Gestell
- 15: Fördermittel
- 15': Schneckengewindeelemente im ersten Abschnitt
- 15": Schneckengewindeelemente im zweiten Abschnitt
- 16: Füllvorrichtung
- 16': erstes Verbindungsteil
- 16": zweites Verbindungsteil
- 17: Austrittsdüse
- 17': zweiter hohler Abschnitt von 17
- 17": erster hohler Abschnitt von 17
- 17"': vorgeschalteter hohler Abschnitt von 17
- 18: Spannschraube
- 19: Unterstützungselement
- 20: Grundplatte
- 30: Schneideanordnung
- 31: Motor von 30
- 32: Gestell von 30
- 33: Scheidewerkzeug
- 34: Schale
- 35: Unterstützungselement
- 40: Speicher
- 50: Wirbelmischer
- 60: Vertikalmischer
- 70: Dosierschnecke
- 80: Trocknungsanlage
- 90: Big-Bag
- 100: System
- 110: Palettenboxen
- 201: Vorrichtung mit mehreren Einheiten
- 202: Ständergestell
- 203: gemeinsame Füllvorrichtung
- 204: Motor für 205
- 205: Einführungshilfe/Verkleinerungseinheit von 203
- 206: Abdeckung von 30
- 207: Auffangtrichter
- 208: Getriebeeinheit von 205
- 209: Eintrittsbereich
- 210: erste Kammer
- 211: zweite verjüngte Kammer
- 212: dritte Kammer
- 213: vierte verjüngte Kammer
- 214: Kompressionsblock
- 215: Flansch
- 216: Kupplungselement
- 217: Welle von 15
- 218: Bereich mit erstem Durchmesser von 217
- 219: konisch zulaufender Bereich von 217
- 220: Bereich mit zweitem Durchmesser von 217
- 221: Kopplungsbereich von 15, Schlitz
- 222: schräges Ende/Fläche fünf von 15

- a: Bautiefe von Gestell
- b: Gesamttiefe von 201
- c: Gesamthöhe von 201
- d: Breite von Gestell
- e: Gesamtbreite von 201
- f: Durchmesser im Bereich 217
- g: Länge von 219
- h: Durchmesser im Bereich 220
- i: Aussendurchmesser von 15'
- j: Aussendurchmesser von 15"
- k: Länge vom Bereich 15'
- l: Länge vom Bereich 15"
- m: Steigung
- α: Neigungswinkel an Ende von 15

## Patentansprüche

1. Verfahren zur Herstellung von Brennstoffformelementen aus Biomassenmaterial, wobei das Biomassenmaterial mittels eines Zuführmittels (70) zu einer Füllvorrichtung (16) zugeführt wird, das Biomassenmaterial aus der Füllvorrichtung (16) entnommen und mittels eines Fördermittels (15) derart verdichtet und aufgerollt wird, so dass aus dem Biomassenmaterial ein wurstförmiges Profil gebildet wird, und das verdichtete und aufgerollte Biomassenmaterial mittels eines Schneidewerkzeugs (33) zu Brennstoffformelementen geschnitten wird, wobei das Biomassenmaterial Rasenschnitt, Sträucherhäcksel, Getreideabfälle, Pferdemist, Nadellaub, Stroh, oder eine Kombination daraus umfasst,
wobei es sich beim Fördermittel (15) um eine Förderschnecke handelt, deren Schneckengewinde an ihrem austrittseitigen Ende mit einer schrägen Fläche ausläuft
und wobei die Brennstoffformelemente von einem einzigen Fördermittel (15) gefördert durch eine einzige zum Fördermittel koaxial angeordnete Austrittsdüse (17) heraustretend gebildet werden, wobei diese Austrittsdüse (17) wenigstens in Förderrichtung einen ersten hohlen Abschnitt (17") aufweist sowie einen zweiten hohlen Abschnitt (17'), und wobei der Durchmesser des ersten hohlen Abschnittes (17") grösser ist als der Durchmesser des zweiten hohlen Abschnittes (17'),
wobei das als Förderschnecke ausgebildete Fördermittel (15) wenigstens abschnittsweise im ersten hohlen Abschnitt (17") und koaxial zu diesem angeordnet ist, und wobei die austrittseitige Spitze der Förderschnecke (15) im wesentlichen beim oder unmittelbar vor dem als Stufe ausgebildeten Übergang vom ersten hohlen Abschnitt (17") zum zweiten hohlen Abschnitt (17') angeordnet ist.

2. Verfahren nach Anspruch 1, **dadurch gekennzeichnet, dass**, die schräge Fläche unter einem Winkel (α) im Bereich von 30-60°, insbesondere bevorzugt im Bereich von 40-50°, ganz besonders bevorzugt circa 45° zur Achse der Förderschnecke geneigt ist.

3. Verfahren nach Anspruch 1 oder 2, **dadurch gekennzeichnet, dass** die Förderschnecke (15) auf der Eintrittseite einen ersten Abschnitt (15') aufweist, in welchem die Schneckengewindelemente einen ersten grösseren Aussen-Durchmesser (i) aufweisen als der zweite Aussen-Durchmesser (j) in einem zweiten Abschnitt (15"), welcher an der Austrittseite angeordnet ist, wobei vorzugsweise der erste Aussen-Durchmesser im Bereich von 30-80 mm, bevorzugt im Bereich von 40-60 mm liegt, und der zweite Aussen-Durchmesser vorzugsweise im Bereich von 10-40 mm, insbesondere bevorzugt im Bereich von 20-30 mm.

4. Verfahren nach einem der vorhergehenden Ansprüche, **dadurch gekennzeichnet, dass** der Durchmesser des ersten hohlen Abschnittes (17") im Bereich von 10-30% grösser ist als der Durchmesser des zweiten hohlen Abschnittes (17').

5. Verfahren nach einem der vorhergehenden Ansprüche, **dadurch gekennzeichnet, dass** wenigstens bereichsweise der erste Aussendurchmesser von Schneckengewindelementen der Förderschnecke in einem ersten Abschnitt (15') nur unwesentlich geringer ist als der Innendurchmesser eines zusätzlichen vorgeschalteten hohlen Abschnittes (17"'), in welchem diese Schneckengewindelemente laufen, und wobei wenigstens bereichsweise der zweite Aussendurchmesser von Schneckengewindelementen der Förderschnecke in einem zweiten Abschnitt (15") nur unwesentlich geringer ist als der Innendurchmesser des zweiten hohlen Abschnittes (17').

6. Verfahren nach einem der vorhergehenden Ansprüche, **dadurch gekennzeichnet, dass** im Verdichtungsbereich das Biomassenmaterial auf einer Temperatur im Bereich von 100-130°C, vorzugsweise im Bereich von 115-125°C gehalten wird, und/oder dass der Feuchtigkeitsgehalt der in den Prozess eingeführten Biomasse im Bereich von 20-35 Gewichtsprozent, vorzugsweise im Bereich von 26-28 Gewichtsprozent beträgt,
und/oder dass die Brennstoffformelemente nach dem Schneiden getrocknet werden,
und/oder dass das Biomassenmaterial vor der Zuführung zur Füllvorrichtung (16) mittels eines Zerkleinerungsmittels zerkleinert wird und/oder dass das Biomassenmaterial vor der Zuführung zur Füllvorrichtung (16) fermentiert wird.

7. Verfahren gemäss einem der vorhergehenden Ansprüche, **dadurch gekennzeichnet, dass** die Verdichtung des Biomassenmaterials durch das Fördermittel (15) dank mindestens einer Durchmesserreduktion der Fördermittelführungselemente (16', 16", 17) realisiert wird, wobei bei der Verdichtung des Biomassenmaterials Wärme derart aufgebaut wird, dass die Verdichtung des Biomassenmaterials beschleunigt und verbessert wird.

8. Brennstoffformelement aus Biomassenmaterial, **dadurch gekennzeichnet, dass** das Biomassenmaterial aus Rasenschnitt, Sträucherhäcksel, Getreideabfällen oder eine Kombination daraus mittels eines Förderungsmittels (15) zu einem wurstförmigen Profil verdichtet und aufgerollt, und mittels eines Schneidewerkzeugs (33) zu Brennstoffformelementen geschnitten ist, wobei die Brennstoffformelemente die enthaltenen Fasern sowohl in umlaufender Richtung orientiert als auch zusätzlich in axialer Richtung geneigt enthalten, wobei die Brennstoffformelemente bevorzugtermassen zusätzlich nach dem Schneiden getrocknet sind, und/oder wobei bevorzugtermassen das Biomassenmaterial vor der Verarbeitung mittels eines Zerkleinerungsmittels zerkleinert wurde und/oder wobei das Biomassenmaterial vor der Verarbeitung fermentiert wurde, vorzugsweise während eines Zeitraums von 6-24 Stunden.

9. Vorrichtung zur Herstellung von Brennstoffformelementen aus Biomassenmaterial (10), **dadurch gekennzeichnet, dass** die Vorrichtung (10) eine Füllvorrichtung (16) umfasst, in welcher Füllvorrichtung (16) das Biomassenmaterial aufbewahrbar ist, dass die Vorrichtung (10) ein Fördermittel (15) umfasst, mittels welchem das Biomassenmaterial derart verdichtbar und aufrollbar ist, dass aus dem Biomassenmaterial ein wurstförmiges Profil bildbar ist, dass die Vorrichtung (10) ein Schneidewerkzeug (33) umfasst, mittels welchem das verdichtete und aufgerollte Biomassenmaterial zu Brennstoffformelementen schneidbar ist,
wobei es sich beim Fördermittel (15) um eine Förderschnecke handelt, deren Schneckengewinde an ihrem austrittseitigen Ende mit einer schrägen Fläche ausläuft,
und wobei die Brennstoffformelemente von einem einzigen Fördermittel (15) gefördert durch eine einzige zum Fördermittel koaxial angeordnete Austrittsdüse (17) heraustretend gebildet werden, wobei diese Austrittsdüse (17) wenigstens in Förderrichtung einen ersten hohlen Abschnitt (17") aufweist sowie einen zweiten hohlen Abschnitt (17'), und wobei der Durchmesser des ersten hohlen Abschnittes (17") grösser ist als der Durchmesser des zweiten hohlen Abschnittes (17'),
wobei das als Förderschnecke ausgebildete Fördermittel (15) wenigstens abschnittsweise im ersten hohlen Abschnitt (17") und koaxial zu diesem angeordnet ist, und wobei die austrittseitige Spitze der Förderschnecke (15) im wesentlichen beim oder unmittelbar vor dem als Stufe ausgebildeten Übergang vom ersten hohlen Abschnitt (17") zum zweiten hohlen Abschnitt (17') angeordnet ist.

10. Vorrichtung nach Anspruch 9, **dadurch gekennzeichnet, dass** es sich beim Fördermittel (15) um eine Förderschnecke handelt, deren Schneckengewinde an ihrem austrittseitigen Ende mit einer schrägen Fläche ausläuft, wobei diese Fläche unter einem Winkel (α) im Bereich von 30-60°, insbesondere bevorzugt im Bereich von 40-50°, ganz besonders bevorzugt circa 45° zur Achse der Förderschnecke geneigt ist.

11. Vorrichtung nach Anspruch 9 oder 10, **dadurch gekennzeichnet, dass**
die Förderschnecke (15) auf der Eintrittseite einen ersten Abschnitt (15') aufweist, in welchem die Schneckengewindelemente einen ersten grösseren Aussen-Durchmesser (i) aufweisen als der zweite Aussen-Durchmesser (j) in einem zweiten Abschnitt (15"), welcher an der Austrittseite angeordnet ist, wobei vorzugsweise der erste Aussen-Durchmesser im Bereich von 30-80 mm, bevorzugt im Bereich von 40-60 mm liegt, und der zweite Aussen-Durchmesser vorzugsweise im Bereich von 10-40 mm, insbesondere bevorzugt im Bereich von 20-30 mm,
und dass die Brennstoffformelemente von einem einzigen Fördermittel (15) gefördert durch eine einzige Austrittsdüse (17) heraustretend gebildet werden, wobei diese Austrittsdüse (17) wenigstens in Förderrichtung einen vorgeschalteten hohlen Abschnitt (17"') aufweist, einen ersten hohlen Abschnitt (17") sowie einen zweiten hohlen Abschnitt (17'), wobei der Durchmesser des vorgeschalteten hohlen Abschnittes (17"') grösser ist als der Durchmesser des ersten hohlen Abschnittes (17") und dieser hinwiederum größer ist als der Durchmesser des zweiten hohlen Abschnittes (17'), und wobei wenigstens bereichsweise der erste Aussendurchmesser von Schneckengewindelementen im ersten Abschnitt (15') nur unwesentlich geringer ist als der Innendurchmesser des vorgeschalteten hohlen Abschnittes (17"'), in welchem diese Schneckengewindelemente laufen, und wenigstens bereichsweise der zweite Aussendurchmesser von Schneckengewindelementen im zweiten Abschnitt (15") nur unwesentlich geringer ist als der Innendurchmesser des ersten hohlen Abschnittes (17").

12. Vorrichtung gemäss einem der Ansprüche 9-11, **dadurch gekennzeichnet, dass** mehrere Fördermittel (15) an einer einzigen Füllvorrichtung (16, 203) angeordnet sind, wobei es sich bei der Füllvorrichtung (16, 203) vorzugsweise um eine längliche nach oben offene trichterförmige Einheit handelt, und wobei die Achsen der Fördermittel (15) parallel zueinander und senkrecht zur Längsrichtung der Füllvorrichtung (16, 203) angeordnet sind, und wobei die Fördermittel (15) in Form von Förderschnecken ausgebildet sind, welche jeweils individuell durch eine einzige Austrittsdüse (17) Biomasse auspressen, wovon vorzugsweise wenigstens drei, insbesondere bevorzugt wenigstens vier solche Förderschnecken angeordnet sind, und wobei jeweils zwei dieser Fördermittel (15) von nur einer Schneideranordnung (30) bedient werden.

13. Vorrichtung gemäss einem der Ansprüche 9-12, **dadurch gekennzeichnet, dass** die Vorrichtung (10) ein Zerkleinerungsmittel umfasst, mittels welchem das Biomassenmaterial vor der Zuführung zur Füllvorrichtung (16) zerkleinerbar ist und/oder dass sie ein Fermentationsmittel umfasst, mittels welchem das Biomassenmaterial vor der Zuführung zur Füllvorrichtung (16) fermentierbar ist.

14. Vorrichtung gemäss einem der Ansprüche 9 bis 13, **dadurch gekennzeichnet, dass** die Vorrichtung (10) Fördermittelführungselemente (16', 16", 17) umfasst, wobei der Durchmesser der Fördermittelführungselemente (16', 16", 17) verkleinerbar ist
und/oder dass die Vorrichtung (10) ein Steuerungsmittel umfasst, mittels welchem die Geschwindigkeit des Fördermittels (15) steuerbar ist.

15. Vorrichtung gemäss einem der Ansprüche 9-14, **dadurch gekennzeichnet, dass** sie mindestens einen Speicher (40) umfasst, in welchem das Biomassenmaterial aufbewahrbar ist, dass sie mindestens ein Zuführmittel (70) umfasst, mittels welchem das Biomassenmaterial zur Vorrichtung (10) zuführbar ist, dass sie mindestens eine Trockenauflage (80) umfasst, auf welcher die fertigen Brennstoffformelemente trockenbar sind, und dass sie mindestens eine Lagerungsvorrichtung (90, 110) umfasst, in welcher die fertigen Brennstoffformelemente lagerbar sind.

## Claims

1. A process for producing fuel molding elements from biomass material, wherein the biomass material is fed by means of a feed means (70) to a filling device (16), the biomass material is removed from the filling device (16) and is compressed and rolled up by means of a conveying means (15) in such a way, so that a sausage-shaped profile is formed from the biomass material, and the compacted and rolled up biomass material is cut into fuel form elements by a cutting tool (33), wherein the biomass material comprises lawn cuttings, shrub chaff, cereal waste, horse manure, needle leaves, straw, or a combination thereof,
wherein the conveying means (15) is a screw conveyor whose screw thread runs out at its outlet end with an inclined surface
and wherein the fuel molding elements are formed by a single conveying means (15) conveyed by a single outlet nozzle (17) coaxial to the conveying means, said outlet nozzle (17) having a first hollow portion (17") at least in the conveying direction and a second hollow portion (17'), and wherein the diameter of the first hollow portion (17") is larger than the diameter of the second hollow portion (17'),
wherein the conveying means (15) formed as a conveying screw is arranged at least in sections in and coaxial with the first hollow section (17"), and wherein the outlet tip of the conveying screw (15) is arranged substantially at or immediately before the transition from the first hollow section (17") to the second hollow section (17') formed as a step.

2. Method according to claim 1, **characterized in that** the inclined surface is inclined at an angle (α) in the range of 30-60°, in particular preferably in the range of 40-50°, particularly preferably about 45° to the axis of the screw conveyor.

3. Method according to claim 1 or 2, **characterized in that** the screw conveyor (15) has a first section (15') on the inlet side, in which the screw thread elements have a first larger outer diameter (i) than the second outer diameter (j) in a second section (15") which is arranged on the outlet side, preferably the first outer diameter being in the range of 30-80 mm, preferably in the range of 40-60 mm, and the second outer diameter preferably in the range of 10-40 mm, especially preferably in the range of 20-30 mm.

4. Method according to any of the preceding claims, **characterized in that** the diameter of the first hollow portion (17") is in the range of 10-30% greater than the diameter of the second hollow portion (17').

5. Method according to one of the preceding claims, **characterized in that** at least in some regions the first outer diameter of screw thread elements of the screw conveyor is only insignificantly smaller in a first section (15') than the inner diameter of an additional upstream hollow section (17"') in which these screw thread elements run, and wherein at least in some regions the second outer diameter of screw thread elements of the screw conveyor in a second section (15") is only insignificantly smaller than the inner diameter of the second hollow section (17').

6. Process according to one of the preceding claims, **characterized in that** the biomass material is kept at a temperature in the range of 100-130°C, preferably in the range of 115-125°C, in the compaction area,
and/or the moisture content of the biomass introduced into the process is in the range of 20-35% by weight, preferably in the range of 26-28% by weight,
and/or that the fuel molding elements are dried after cutting,
and/or that the biomass material is comminuted by means of a comminuting means before being fed to the filling device (16) and/or that the biomass material is fermented before being fed to the filling device (16).

7. Method according to one of the preceding claims, **characterized in that** the compression of the biomass material is realized by the conveying means (15) thanks to at least one diameter reduction of the conveying means guide elements (16', 16", 17), heat being built up during the compression of the biomass material in such a way that the compression of the biomass material is accelerated and improved.

8. A fuel molding element of biomass material, **characterized in that** the biomass material of lawn cuttings, shrub shredders, cereal waste or a combination thereof is compacted and rolled up into a sausage-shaped profile by means of a conveying means (15), and is cut into fuel molding elements by means of a cutting tool (33), wherein the fuel molding elements contain the fibres both oriented in a circumferential direction and additionally inclined in an axial direction, wherein the fuel molding elements are additionally dried preferably after cutting, and/or wherein preferably the biomass material was comminuted by means of a comminuting means before processing and/or wherein the biomass material was fermented before processing, preferably during a period of 6-24 hours.

9. Apparatus for producing fuel molding elements from biomass material (10), **characterized in that** the apparatus (10) comprises a filling device (16) in which filling device (16) the biomass material can be stored, **in that** the apparatus (10) comprises a conveying means (15), by means of which the biomass material can be compacted and rolled up in such a way that a sausage-shaped profile can be formed from the biomass material, that the device (10) comprises a cutting tool (33) by means of which the compacted and rolled up biomass material can be cut into fuel form elements,
wherein the conveying means (15) is a screw conveyor whose screw thread runs out at its outlet end with an inclined surface,
and wherein the fuel molding elements are formed by a single conveying means (15) conveyed by a single outlet nozzle (17) coaxial to the conveying means, said outlet nozzle (17) having a first hollow portion (17") at least in the conveying direction and a second hollow portion (17'), and wherein the diameter of the first hollow portion (17") is larger than the diameter of the second hollow portion (17'),
wherein the conveying means (15) formed as a conveying screw is arranged at least in sections in and coaxial with the first hollow section (17"), and wherein the outlet tip of the conveying screw (15) is arranged substantially at or immediately before the transition from the first hollow section (17") to the second hollow section (17') formed as a step.

10. Device according to claim 9, **characterized in that** the conveying means (15) is a screw conveyor whose screw thread runs out at its outlet end with an inclined surface, this surface being inclined at an angle (α) in the range of 30-60°, in particular preferably in the range of 40-50°, particularly preferably about 45° to the axis of the screw conveyor.

11. Device according to claim 9 or 10, **characterized in that**
the screw conveyor (15) has a first section (15') on the inlet side, in which the screw threaded elements have a first larger outer diameter (i) than the second outer diameter (j) in a second section (15") arranged on the outlet side, preferably the first outer diameter being in the range of 30-80 mm, preferably in the range of 40-60 mm, and the second outer diameter preferably in the range of 10-40 mm, especially preferably in the range of 20-30 mm,
and **in that** the fuel forming elements are formed by a single conveying means (15) conveyed through a single outlet nozzle (17), this outlet nozzle (17) having an upstream hollow section (17"') at least in the conveying direction, a first hollow portion (17") and a second hollow portion (17'), wherein the diameter of the upstream hollow portion (17"') is greater than the diameter of the first hollow portion (17") and the latter is greater than the diameter of the second hollow portion (17"), and wherein at least in some regions the first outer diameter of worm threaded elements in the first portion (15") is only insignificantly smaller than the inner diameter of the upstream hollow portion (17"') in which these worm threaded elements run, and at least in some regions the second outer diameter of worm threaded elements in the second portion (15") is only insignificantly smaller than the inner diameter of the first hollow portion (17").

12. Device according to one of claims 9-11, **characterized in that** a plurality of conveying means (15) are arranged on a single filling device (16, 203), the filling device (16, 203) preferably being an elongate funnel-shaped unit open upwards, and the axes of the conveying means (15) being parallel to one another and perpendicular to the longitudinal direction of the filling device (16, 203), 203), and wherein the conveying means (15) are in the form of conveying screws, each of which presses biomass individually through a single outlet nozzle (17), of which preferably at least three, in particular preferably at least four, are arranged, and wherein two of these conveying means (15) are each operated by only one cutting arrangement (30).

13. Device according to one of claims 9-12, **characterized in that** the device (10) comprises a shredding agent by means of which the biomass material can be shredded before being fed to the filling device (16) and/or **in that** it comprises a fermentation agent by means of which the biomass material can be fermented before being fed to the filling device (16).

14. Device according to one of claims 9 to 13, **characterized in that** the device (10) comprises conveying means guide elements (16', 16", 17), the diameter of the conveying means guide elements (16', 16", 17) being reducible
and/or **in that** the device (10) comprises a control means by means of which the speed of the conveying means (15) is controllable.

15. Device according to one of claims 9-14, **characterized in that** it comprises at least one reservoir (40) in which the biomass material can be stored, **in that** it comprises at least one feeding means (70) by means of which the biomass material can be fed to the device (10), **in that** it comprises at least one dry support (80) on which the finished fuel moulding elements can be dried, and **in that** it comprises at least one storage device (90, 110) in which the finished fuel moulding elements can be stored.

## Revendications

1. Procédé de fabrication d'éléments combustibles préformés à partir d'un matériau de biomasse, selon lequel le matériau de biomasse est acheminé à l'aide d'un moyen d'acheminement (70) dans un dispositif de remplissage (16), le matériau de biomasse est déchargé du dispositif de remplissage (16), et compacté et cylindré à l'aide d'un moyen de transport (15) de manière à former un profilé en forme de boudin à partir du matériau de biomasse, et le matériau de biomasse compacté et cylindré est découpé à l'aide d'un outil de découpe (33) en éléments combustibles préformés, le matériau de biomasse comprenant du gazon coupé, des arbustes hachés, des déchets de céréales, du fumier de cheval, des feuilles en aiguilles, de la paille ou une combinaison de ceux-ci,
le moyen de transport (15) consistant en une vis de transport, dont le filetage de vis se termine à son extrémité de sortie avec une surface inclinée,
et les éléments combustibles préformés transportés par un moyen de transport individuel (15) étant formés en sortant par une buse de sortie individuelle (17) agencée coaxialement au moyen de transport, cette buse de sortie (17) comprenant au moins dans la direction de transport une première section creuse (17"), ainsi qu'une deuxième section creuse (17'), le diamètre de la première section creuse (17") étant supérieur au diamètre de la deuxième section creuse (17'),
le moyen de transport (15) configuré sous la forme d'une vis de transport étant agencé au moins en partie dans la première section creuse (17") et coaxialement à celle-ci, et la pointe du côté de la sortie de la vis de transport (15) étant agencée essentiellement au niveau de ou immédiatement avant la transition sous la forme d'un seuil entre la première section creuse (17") et la deuxième section creuse (17').

2. Procédé selon la revendication 1, **caractérisé en ce que** la surface inclinée est inclinée à un angle (α) dans la plage allant de 30 à 60°, de manière particulièrement préférée dans la plage allant de 40 à 50°, de manière tout particulièrement préférée d'environ 45°, par rapport à l'axe de la vis de transport.

3. Procédé selon la revendication 1 ou 2, **caractérisé en ce que** la vis de transport (15) comprend du côté de l'entrée une première section (15'), dans laquelle les éléments de filetage de vis présentent un premier diamètre extérieur (i) plus grand que le deuxième diamètre extérieur (j) dans une deuxième section (15"), qui est agencée du côté de la sortie, le premier diamètre extérieur se situant de préférence dans la plage allant de 30 à 80 mm, de préférence dans la plage allant de 40 à 60 mm, et le deuxième diamètre extérieur se situant de préférence dans la plage allant de 10 à 40 mm, de manière particulièrement préférée dans la plage allant de 20 à 30 mm.

4. Procédé selon l'une quelconque des revendications précédentes, **caractérisé en ce que** le diamètre de la première section creuse (17") est dans la plage allant de 10 à 30 % plus grand que le diamètre de la deuxième section creuse (17').

5. Procédé selon l'une quelconque des revendications précédentes, **caractérisé en ce qu'**au moins en zones, le premier diamètre extérieur d'éléments de filetage de vis de la vis de transport dans une première section (15') n'est qu'accessoirement plus petit que le diamètre intérieur d'une section creuse supplémentaire en amont (17"') dans laquelle ces éléments de filetage de vis passent, et, au moins en zones, le deuxième diamètre extérieur d'éléments de filetage de vis de la vis de transport dans une deuxième section (15") n'est qu'accessoirement plus petit que le diamètre intérieur de la deuxième section creuse (17').

6. Procédé selon l'une quelconque des revendications précédentes, **caractérisé en ce que**, dans la zone de compactage, le matériau de biomasse est maintenu à une température dans la plage allant de 100 à 130 °C, de préférence dans la plage allant de 115 à 125 °C, et/ou **en ce que** la teneur en humidité de la biomasse introduite dans le procédé est dans la plage allant de 20 à 35 pour cent en poids, de préférence dans la plage allant de 26 à 28 pour cent en poids,
et/ou **en ce que** les éléments combustibles préformés sont séchés après la découpe,
et/ou **en ce que** le matériau de biomasse est broyé à l'aide d'un moyen de broyage avant l'acheminement dans le dispositif de remplissage (16), et/ou **en ce que** le matériau de biomasse est fermenté avant l'acheminement dans le dispositif de remplissage (16).

7. Procédé selon l'une quelconque des revendications précédentes, **caractérisé en ce que** le compactage du matériau de biomasse par le moyen de transport (15) est réalisé grâce à au moins une réduction de diamètre des éléments d'acheminement du moyen de transport (16', 16", 17), de la chaleur se développant lors du compactage du matériau de biomasse de telle sorte que le compactage du matériau de biomasse soit accéléré et amélioré.

8. Élément combustible préformé à base d'un matériau de biomasse, **caractérisé en ce que** le matériau de biomasse à base de gazon coupé, d'arbustes hachés, de déchets de céréales ou d'une combinaison de ceux-ci est compacté et cylindré à l'aide d'un moyen de transport (15) pour former un profilé en forme de boudin, et découpé à l'aide d'un outil de découpe (33) pour former des éléments combustibles préformés, les éléments combustibles préformés contenant les fibres contenues aussi bien orientées dans la direction circulaire qu'également inclinées dans la direction axiale, les éléments combustibles préformés étant de préférence en outre séchés après la découpe, et/ou le matériau de biomasse ayant de préférence été broyé avant l'usinage à l'aide d'un moyen de broyage, et/ou le matériau de biomasse ayant été fermenté avant l'usinage, de préférence pendant une durée de 6 à 24 heures.

9. Dispositif pour la fabrication d'éléments combustibles préformés à partir d'un matériau de biomasse (10), **caractérisé en ce que** le dispositif (10) comprend un dispositif de remplissage (16), le matériau de biomasse pouvant être conservé dans le dispositif de remplissage (16), **en ce que** le dispositif (10) comprend un moyen de transport (15), à l'aide duquel le matériau de biomasse peut être compacté et cylindré de manière à former un profilé en forme de boudin à partir du matériau de biomasse, **en ce que** le dispositif (10) comprend un outil de découpe (33), à l'aide duquel le matériau de biomasse compacté et cylindré peut être découpé en éléments combustibles préformés,
le moyen de transport (15) consistant en une vis de transport, dont le filetage de vis se termine à son extrémité de sortie avec une surface inclinée,
et les éléments combustibles préformés transportés par un moyen de transport individuel (15) étant formés en sortant par une buse de sortie individuelle (17) agencée coaxialement au moyen de transport, cette buse de sortie (17) comprenant au moins dans la direction de transport une première section creuse (17"), ainsi qu'une deuxième section creuse (17'), et le diamètre de la première section creuse (17") étant supérieur au diamètre de la deuxième section creuse (17'),
le moyen de transport (15) configuré sous la forme d'une vis de transport étant agencé au moins en partie dans la première section creuse (17") et coaxialement à celle-ci, et la pointe du côté de la sortie de la vis de transport (15) étant agencée essentiellement au niveau de ou immédiatement avant la transition sous la forme d'un seuil entre la première section creuse (17") et la deuxième section creuse (17').

10. Dispositif selon la revendication 9, **caractérisé en ce que** le moyen de transport (15) consiste en une vis de transport, dont le filetage de vis se termine à son extrémité de sortie avec une surface inclinée, cette surface étant inclinée d'un angle (α) dans la plage allant de 30 à 60°, de manière particulièrement préférée dans la plage allant de 40 à 50°, de manière tout particulièrement préférée d'environ 45°, par rapport à l'axe de la vis de transport.

11. Dispositif selon la revendication 9 ou 10, **caractérisé en ce que** la vis de transport (15) comprend du côté de l'entrée une première section (15'), dans laquelle les éléments de filetage de vis présentent un premier diamètre extérieur (i) plus grand que le deuxième diamètre extérieur (j) dans une deuxième section (15"), qui est agencée du côté de la sortie, le premier diamètre extérieur se situant de préférence dans la plage allant de 30 à 80 mm, de préférence dans la plage allant de 40 à 60 mm, et le deuxième diamètre extérieur se situant de préférence dans la plage allant de 10 à 40 mm, de manière particulièrement préférée dans la plage allant de 20 à 30 mm,
et **en ce que** les éléments combustibles préformés transportés par un moyen de transport individuel (15) sont formés en sortant par une buse de sortie individuelle (17), cette buse de sortie (17) comprenant au moins dans la direction de transport une section creuse en amont (17"'), une première section creuse (17") et une deuxième section creuse (17'), le diamètre de la section creuse en amont (17"') étant supérieur au diamètre de la première section creuse (17") et celui-ci étant lui-même supérieur au diamètre de la deuxième section creuse (17'), et au moins en zones, le premier diamètre extérieur d'éléments de filetage de vis dans la première section (15') n'étant qu'accessoirement plus petit que le diamètre intérieur de la section creuse en amont (17"') dans laquelle ces éléments de filetage de vis passent, et, au moins en zones, le deuxième diamètre extérieur d'éléments de filetage de vis dans la deuxième section (15") n'étant qu'accessoirement plus petit que le diamètre intérieur de la première section creuse (17").

12. Dispositif selon l'une quelconque des revendications 9 à 11, **caractérisé en ce que** plusieurs moyens de transport (15) sont agencés sur un dispositif de remplissage individuel (16, 203), le dispositif de remplissage (16, 203) consistant de préférence en une unité oblongue en forme d'entonnoir ouverte vers le haut, et les axes des moyens de transport (15) étant agencés en parallèle les uns des autres et perpendiculairement à la direction longitudinale du dispositif de remplissage (16, 203), et les moyens de transport (15) étant configurés sous la forme de vis de transport, qui pressent chacune individuellement la biomasse au travers d'une buse de sortie individuelle (17), de préférence au moins trois, de manière particulièrement préférée au moins quatre vis de transport étant agencées, et à chaque fois deux de ces moyens de transport (15) ne se servant que d'un appareil de découpe (30).

13. Dispositif selon l'une quelconque des revendications 9 à 12, **caractérisé en ce que** le dispositif (10) comprend un moyen de broyage, à l'aide duquel le matériau de biomasse peut être broyé avant l'acheminement dans le dispositif de remplissage (16), et/ou **en ce qu'**il comprend un moyen de fermentation, à l'aide duquel le matériau de biomasse peut être fermenté avant l'acheminement dans le dispositif de remplissage (16).

14. Dispositif selon l'une quelconque des revendications 9 à 13, **caractérisé en ce que** le dispositif (10) comprend des éléments d'acheminement de moyen de transport (16', 16", 17), le diamètre des éléments d'acheminement de moyen de transport (16', 16", 17) pouvant être réduit,
et/ou **en ce que** le dispositif (10) comprend un moyen de régulation, à l'aide duquel la vitesse du moyen de transport (15) peut être régulée.

15. Dispositif selon l'une quelconque des revendications 9 à 14, **caractérisé en ce qu'**il comprend au moins un dispositif de stockage (40), dans lequel le matériau de biomasse peut être stocké, **en ce qu'**il comprend au moine un moyen d'alimentation, à l'aide duquel le matériau de biomasse peut être introduit dans le dispositif (10), **en ce qu'**il comprend au moyen une unité de séchage (80), sur laquelle les éléments combustibles préformés finis peuvent être séchés, et **en ce qu'**il comprend au moins un dispositif d'entreposage (90, 110), dans lequel les éléments combustibles préformés finis peuvent être entreposés.
